# EUROPEAN PATENT APPLICATION

(11) **EP 4 691 882 A1**
(43) Date of publication of application: **11.02.2026**
(21) Application number: 24781408.0
(22) Date of filing: 14.03.2024
(51) Int. Cl.: B62B 3/02, B62B 5/00

(54) **ANIMAL TRANSPORT CART**

(30) Priority: 31.03.2023 CN 202310339402
(71) Applicant: Jani International Pte. Ltd., Singapore 569874 (SG)
(72) Inventor: CHENG, Chinming, Hong Kong, 999077 (HK); CHENG, Kaiwen, Hong Kong, 999077 (HK)
(74) Representative: Pfenning, Meinig & Partner mbB
(86) International application number: PCT/SG2024/050155
(87) International publication number: WO 2024/205490

(57) **Abstract**

An animal transport cart, comprising a cart body and an animal carrier, wherein the cart body comprises a cart handle, a storage layer, at least one pair of frame vertical rods which are connected to the cart handle and the storage layer, and a wheel member. According to the concept of the present disclosure, the animal carrier comprises a box body and a support device, wherein the box body comprises a bottom and a peripheral wall connected to the bottom, and the support device and the box body are integrated on the outer side of the peripheral wall; the cart body comprises a supporting part, and the supporting part is parallel to the storage layer and is connected to a position higher than the storage layer on the frame vertical rod; and the animal carrier is separably connected to the supporting part by virtue of one of the peripheral wall and the bottom.

## Description

### TECHNICAL FIELD

The present disclosure relates to animal carriers, and particularly, to an animal carrier that is easy to install and has high stability and an animal transporting cart on which the animal carrier is stably installed.

### BACKGROUND

Various pet travel cages or pet carts are currently on the market, so that a user (such as a pet owner or a caregiver) can safely take a pet outside; where, some of the pet carts are consist of a detachable portable pet cradle (or a pet travel cage) and a cart frame, so as to achieve the flexibility and convenience in use.

In the existing detachable pet cart, the portable pet cradle or the pet travel cage is fixed on the cart frame in a lacing method or a Velcro adhesive method, and these fixing methods are relatively complicated in operation and have insufficient stability after being fixed. Furthermore, cart structures of such detachable pet carts are designed mostly for soft pet travel cages, and can only be specially used for carrying pets or can only be used for hanging or temporarily placing a small number of items at the cart handle in addition to carrying pets.

### SUMMARY

The present disclosure provides an animal transporting cart, which may stably install and fix an animal carrier thereon, at the same time, provide enough storage space for a user to place objects. The animal transporting cart of the present disclosure includes a cart body and an animal carrier. The cart body includes a cart handle, a storage layer, at least one pair of frame vertical rods which are connected to the cart handle and the storage layer, and a wheel member. The animal carrier according to the concept of the present disclosure includes a box body and a bracket device, where the box body includes a bottom and a peripheral wall connected to the bottom, and the bracket device and the box body are integrated on the outer side of the peripheral wall; the cart body includes a supporting part, and the supporting part is parallel to the storage layer and is connected to the frame vertical rod at a position higher than the storage layer; and the animal carrier is separably connected to the supporting part by virtue of one of the peripheral wall and the bottom.

According to the above concept, the supporting part includes four side parts corresponding to the peripheral wall of the animal carrier, and the animal carrier is separably connected to the corresponding opposite side parts of the supporting part with the opposite side parts of the peripheral wall.

According to the above concept, the animal carrier includes at least one pair of connecting structures, the connecting structure is connected to the outer side of the opposite side part of the peripheral wall, and the box body is correspondingly connected to the opposite side part of the supporting part through the connecting structure.

According to the above concept, the connecting structure and the box body are an integrally formed structure.

According to the above concept, the connecting structure and the bracket device are an integrally formed structure.

According to the above concept, the animal carrier includes an adjusting bracket, the adjusting bracket has opposite fixed sides and opposite movable sides, the adjusting bracket is connected to the outer side of the peripheral wall of the box body through the fixed sides, and the adjusting bracket changes the distance between the movable sides through the telescoping of the movable sides; the connecting structures are disposed at the movable sides, respectively, and the box body is connected to the supporting part through the connecting structures.

According to the above concept, the connecting structure is a fixed lug, and the box body is correspondingly hung to the opposite side parts of the supporting part through the fixed lug so as to be connected to the supporting part.

According to the above concept, the connecting structure is a first connecting structure, the supporting part includes a second connecting structure corresponding to the first connecting structure, the second connecting structure is disposed on the corresponding opposite side part of the supporting part, and the box body is connected to the supporting part through the corresponding engagement between the first connecting structure and the second connecting structure.

According to the above concept, the first connecting structure is a connecting base, the second connecting structure is a connecting buckle, and the box body is connected to the supporting part via the connecting buckle correspondingly accommodating in the connecting base.

According to the above concept, the first connecting structure is a positioning bump, the second connecting structure is a connecting groove, and the box body is connected to the supporting part via the positioning bump correspondingly engaging with the connecting groove.

According to the above concept, the supporting part includes a fixed base, the fixed base includes a supporting surface corresponding to the bottom of the animal carrier, and the animal carrier is separably connected to the supporting surface of the supporting part with the bottom.

According to the above concept, the animal carrier includes a connecting structure, the connecting structure is connected to the outer side of the bottom, and the box body is correspondingly connected to the supporting surface of the supporting part through the connecting structure.

According to the above concept, the connecting structure is a first connecting structure, the supporting part includes a second connecting structure corresponding to the first connecting structure, the second connecting structure is disposed on the supporting surface, and the box body is connected to the supporting part through the corresponding engagement between the first connecting structure and the second connecting structure.

According to the above concept, the first connecting structure is a bracket device, the second connecting structure is a fixed guide groove, and the bracket device may be matched and engaged with the fixed guide groove.

According to the above concept, the fixed base includes a clamping hook disposed in the fixed guide groove, so that the bracket device is engaged with the clamping hook when the bracket device is engaged with the fixed guide groove.

According to the above concept, the first connecting structure is disposed at the center of the outer side of the bottom of the box body, the second connecting structure is disposed at the center of the supporting surface, and the first connecting structure and the second connecting structure may be matched and buckled.

According to the above concept, the first connecting structure and the second connecting structure are pressed in and buckled or rotated and buckled.

According to the above concept, the first connecting structure is a guide rail and the second connecting structure is a guide groove, the guide rail and the guide groove may be matched and engaged.

According to the above concept, the animal carrier includes at least one positioning groove formed at the outer side of the bottom of the box body, and the supporting part includes a positioning part which may be driven to protrude from the supporting part so as to be engaged with the positioning groove.

According to the above concept, the supporting part includes a bottom plate and a peripheral side plate connected to the bottom plate.

According to the above concept, the supporting part also includes a top plate connected to the peripheral side plate and opposite to the bottom plate.

According to the above concept, the first connecting structure is a first magnetic element, the second connecting structure is a second magnetic element, and the box body is connected to the supporting part through magnetic attraction engagement of the first magnetic element and the second magnetic element.

According to the above concept, the animal transporting cart includes an adjusting device, the adjusting device is connected with the supporting part and disposed in the frame vertical rod, and the supporting part is movable up and down in the frame vertical rod.

According to the above concept, the animal transporting cart includes an adjusting device, the adjusting device is connected with the supporting part and disposed in the frame vertical rod, and the adjusting device is rotatable around the direction of the connecting line where the cart handle connects with the frame vertical rod.

According to another conception of the present disclosure, the disclosed animal transporting cart includes a cart body and an animal carrier, where the cart body includes a cart handle, a storage layer, at least one pair of frame vertical rods which are connected to the cart handle and the storage layer, and a wheel member. According to the concept of the present disclosure, the animal carrier includes a box body and a bracket device, where the box body includes a bottom and a peripheral wall connected to the bottom, and the bracket device and the box body are integrated on the outer side of the peripheral wall; the cart body includes a supporting part, and the supporting part is perpendicular to the storage layer and is connected between the frame vertical rods at a position higher than the storage layer; and the animal carrier further includes a connecting structure, the connecting structure is disposed at the outer side of the peripheral wall, and the box body is connected to the supporting part through the connecting structure.

According to the above concept, the connecting structure is a fixed lug, the supporting part is a supporting plate, and the box body is hung on the supporting plate through the fixed lug.

### BRIEF DESCRIPTION OF THE DRAWINGS

In order to further understand the features and technical contents of the present disclosure, Referring to the detailed description of the embodiments of the present disclosure and the accompanying drawings. The disclosed detailed description and the accompanying drawings are only provided for reference and illustration, and are not intended to limit the present disclosure; in which:

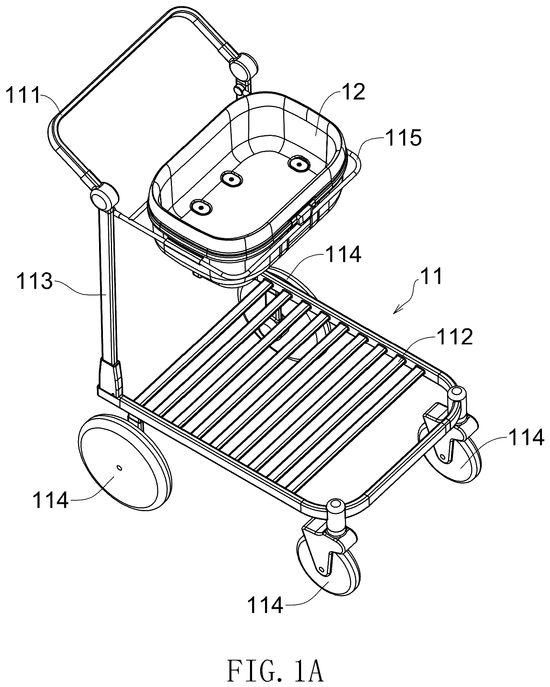

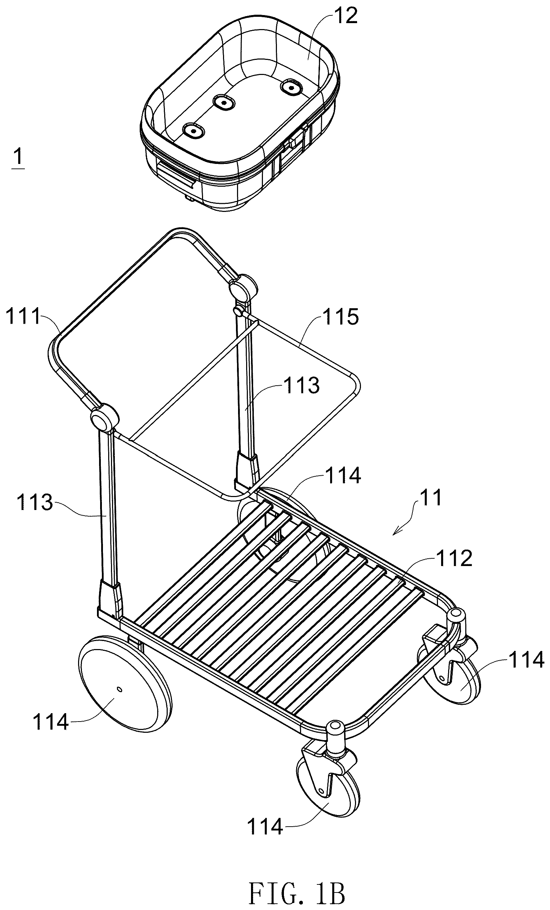

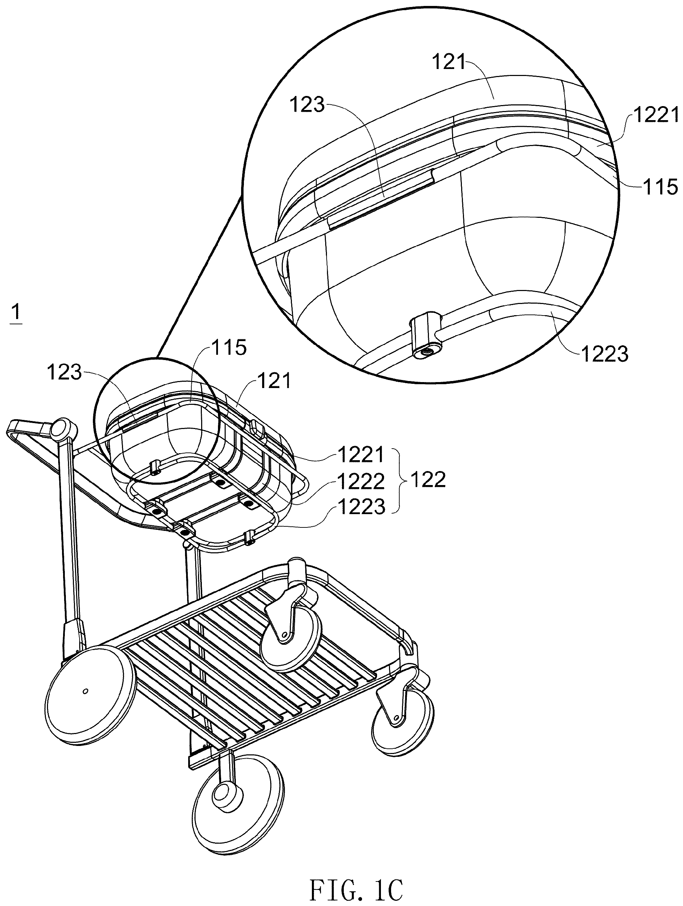

Figs. 1A to 1C are schematic appearance views of an animal transporting cart according to one embodiment of the present disclosure, in which Figs. 1A and 1B respectively show the appearance of the animal transporting cart in a state where the animal carrier is combined with and separated from the cart body, and Fig. 1C shows a schematic structure of a fixed lug of the animal carrier of the embodiment;

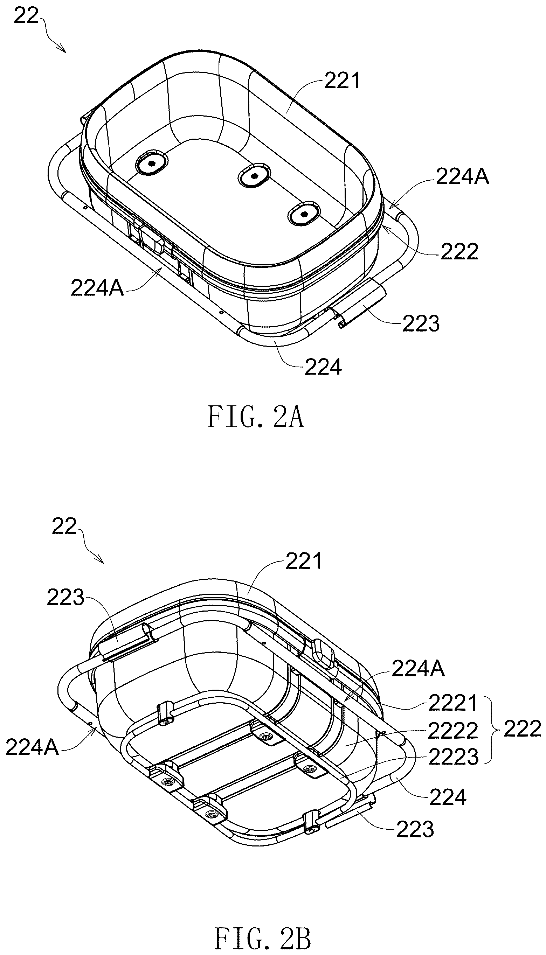

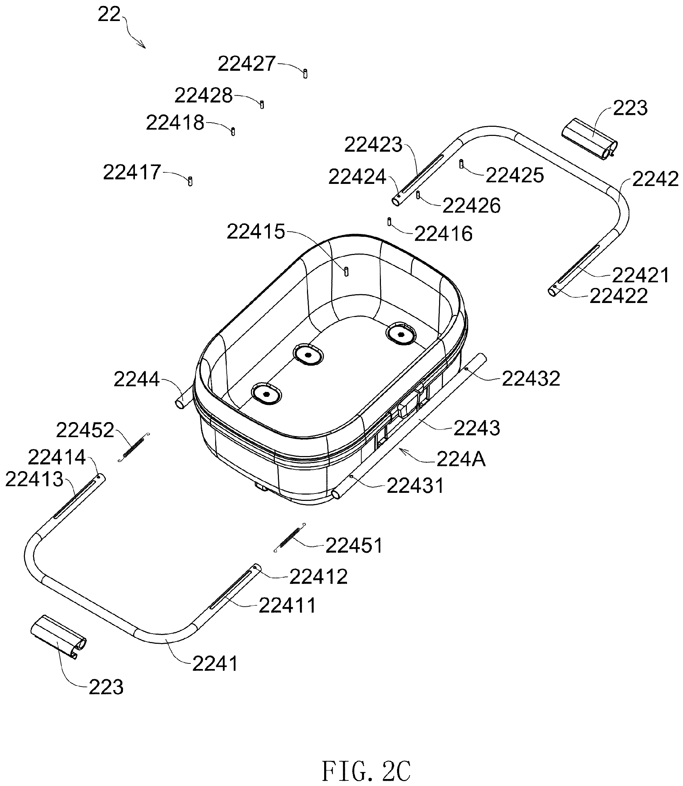

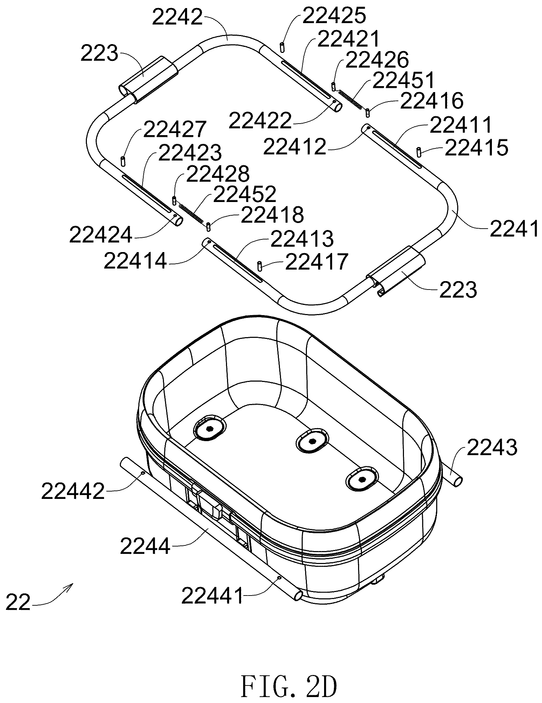

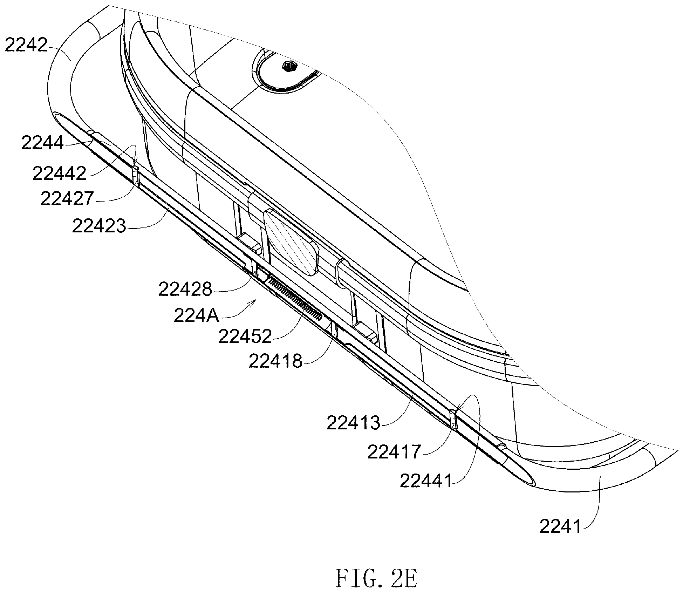

Figs. 2A to 2E are schematic appearance views of an animal carrier of an animal transporting cart according to one embodiment of the present disclosure, in which Figs. 2A and 2B show the appearance of the animal carrier of the embodiment from different perspectives, Figs. 2C and 2D show a detailed structure of an adjusting bracket of the embodiment in an exploded schematic view, and Fig. 2E shows a detailed structure of the adjusting bracket of the embodiment in a partial cross-sectional schematic view;

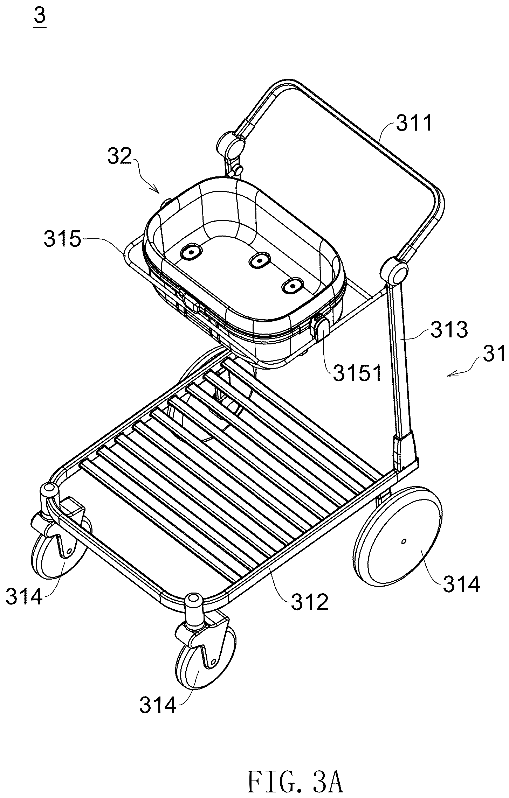

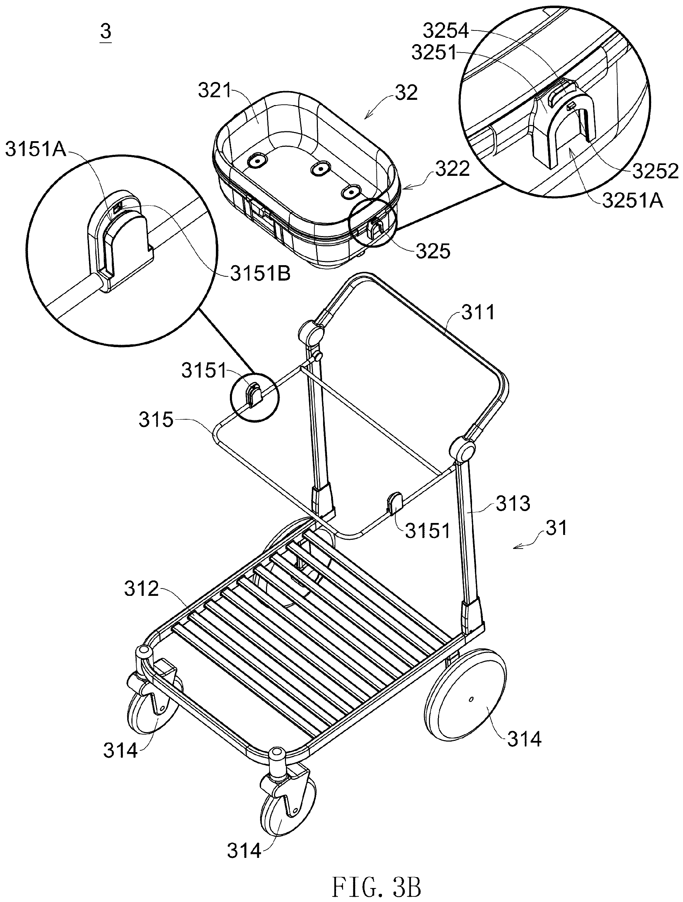

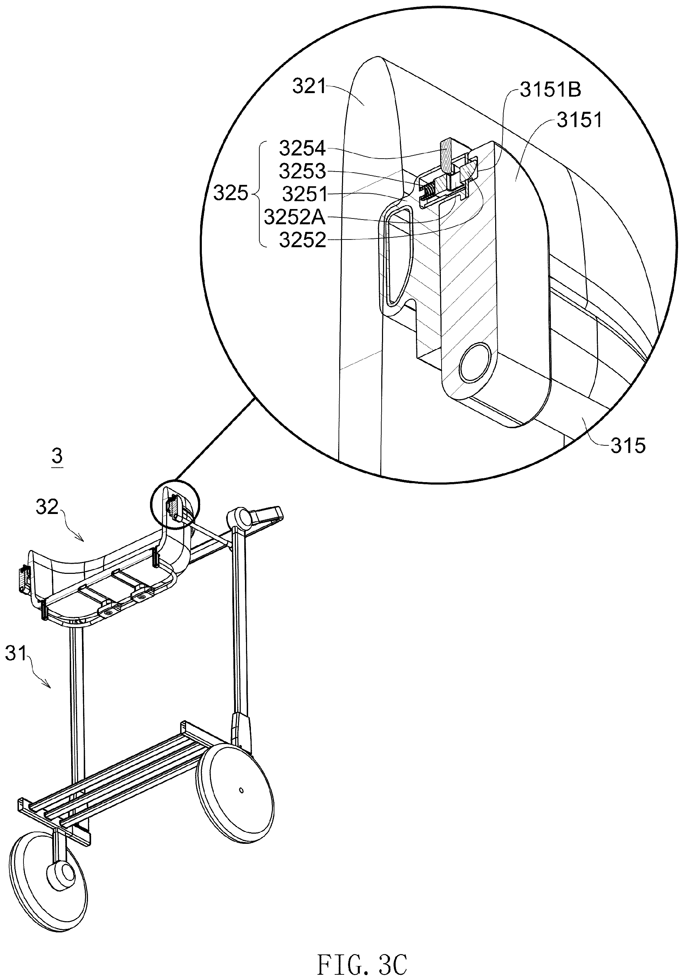

Figs. 3A to 3C are schematic appearance views of an animal transporting cart according to one embodiment of the present disclosure, in which Figs. 3A and 3B respectively show the appearance of the animal transporting cart in a state where the animal carrier is combined with and separated from the cart body, and Fig. 3C shows a detailed structure of the connecting structure and the connecting buckle of the embodiment in a partially enlarged cross-sectional view of the animal transporting cart;

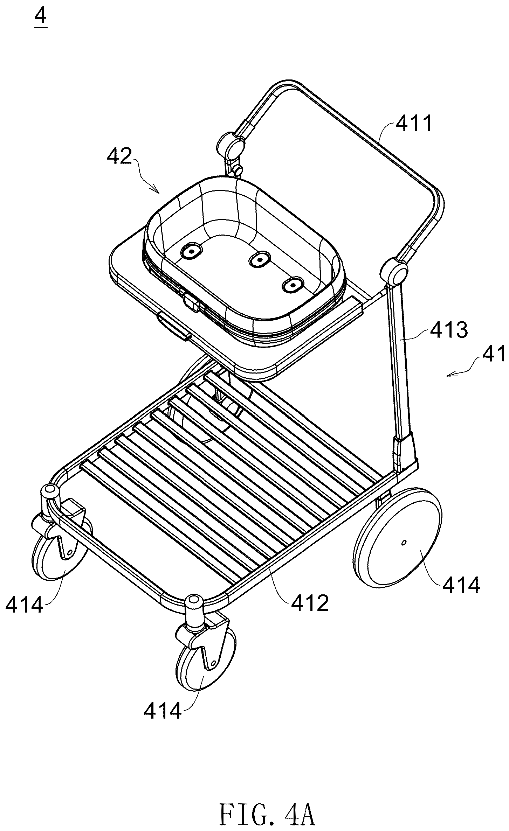

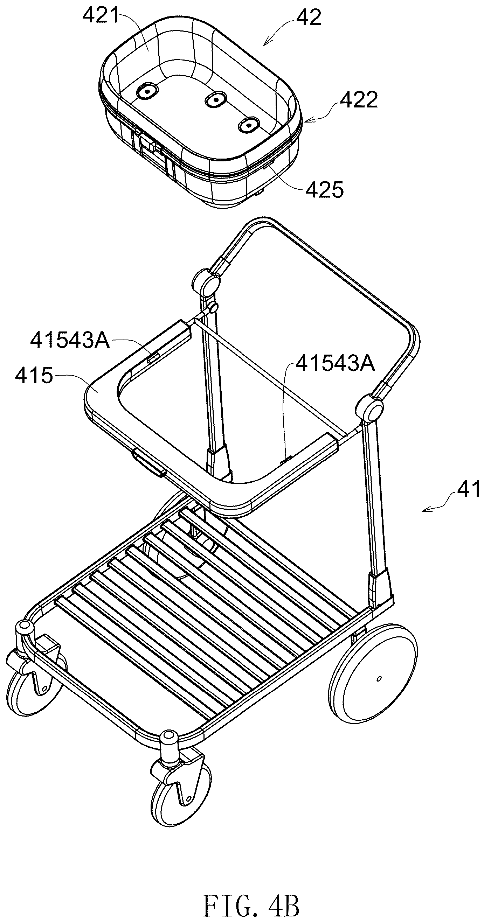

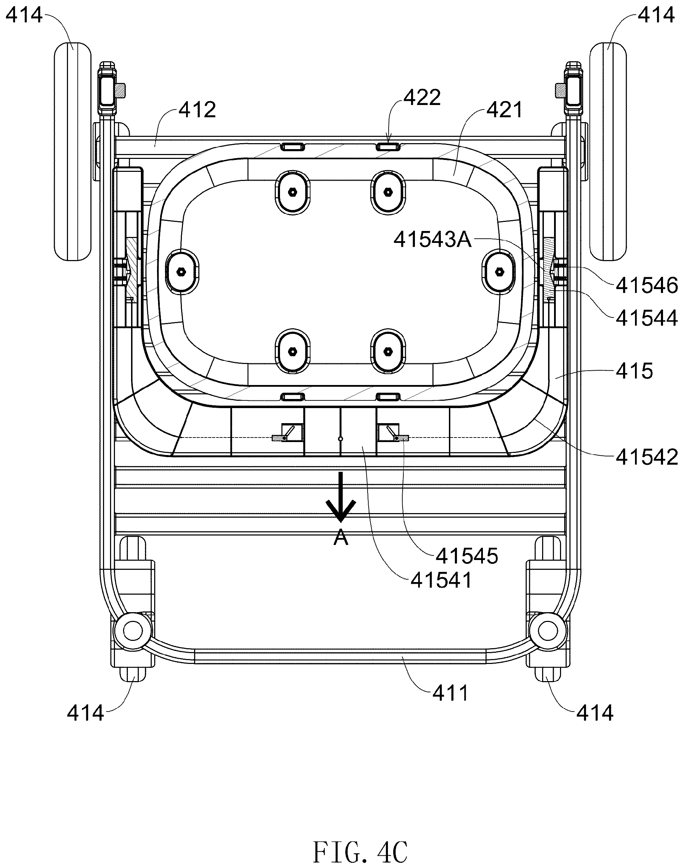

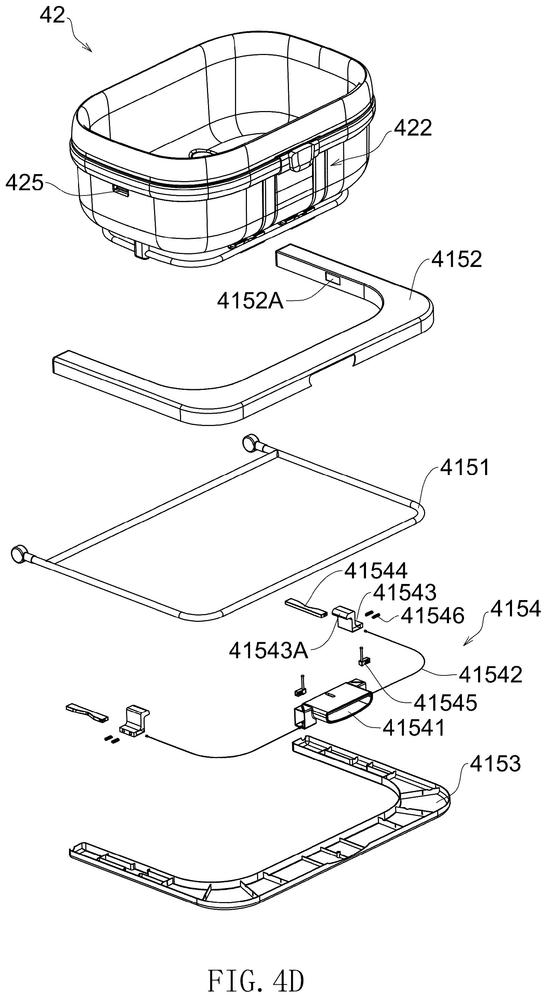

Figs. 4A to 4D are schematic appearance views of an animal transporting cart according to one embodiment of the present disclosure, in which Figs. 4A and 4B respectively show the appearance of the animal transporting cart in a in a state where the animal carrier is combined with and separated from the cart body, and Figs. 4C and 4D respectively show a detailed structure of a supporting part of the embodiment in an upper cross-sectional view of the animal transporting cart and an exploded schematic view of the animal carrier;

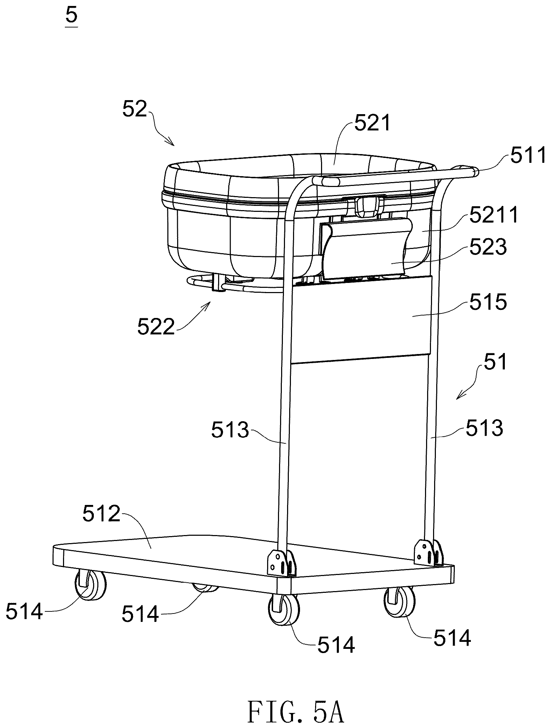

Figs. 5A to 5B are schematic appearance views of an animal transporting cart according to one embodiment of the present disclosure from different perspectives;

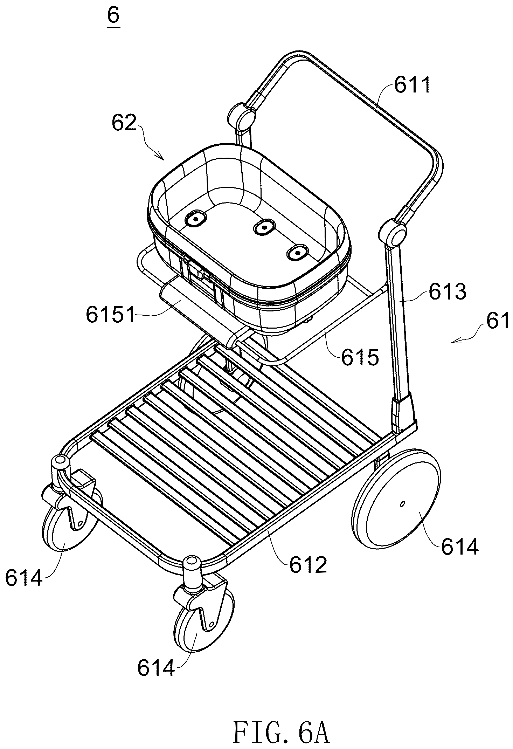

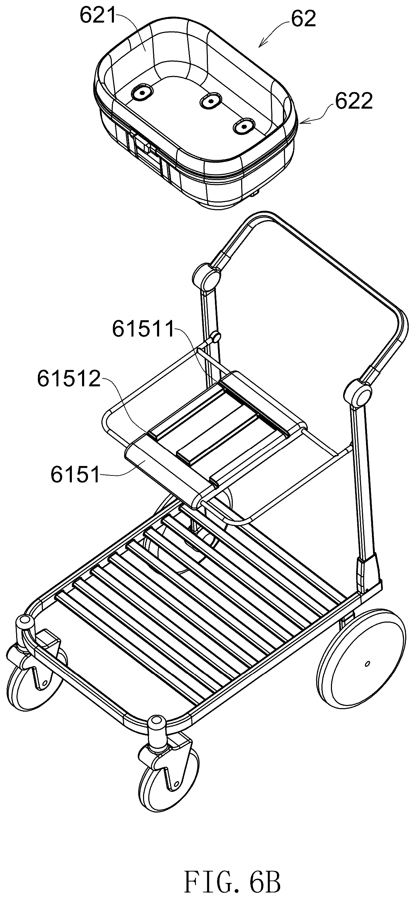

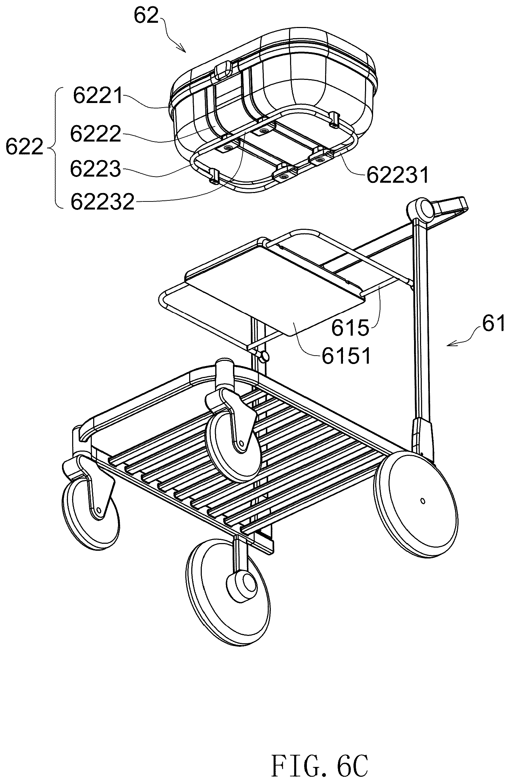

Figs. 6A to 6C are schematic appearance views of an animal transporting cart according to one embodiment of the present disclosure, in which Fig. 6A shows the appearance of the animal transporting cart in a state where the animal carrier is combined with the cart body, and Figs. 6B and 6C show the appearance of the animal transporting cart in a state where the animal carrier is separated from the cart body from different perspectives;

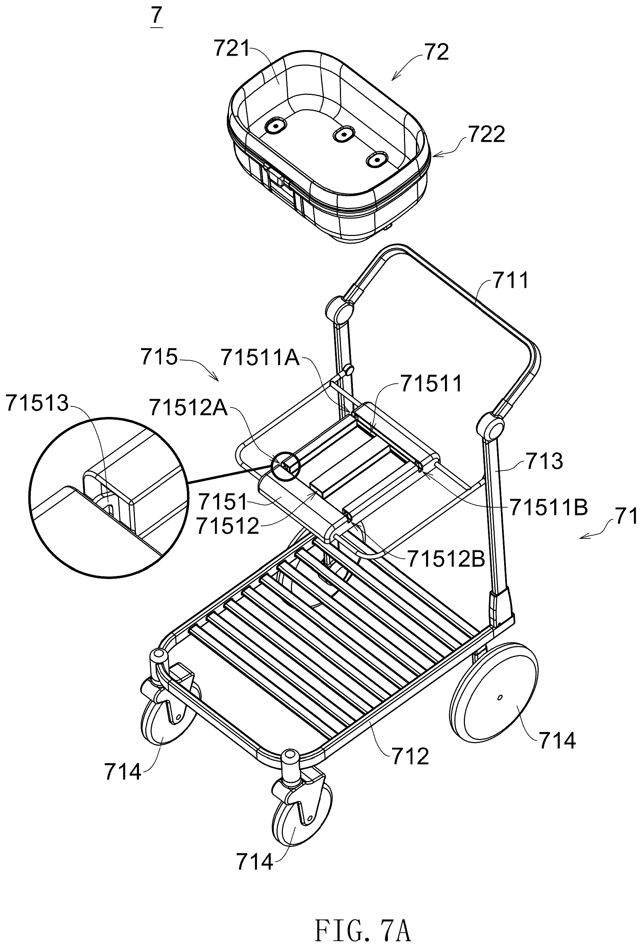

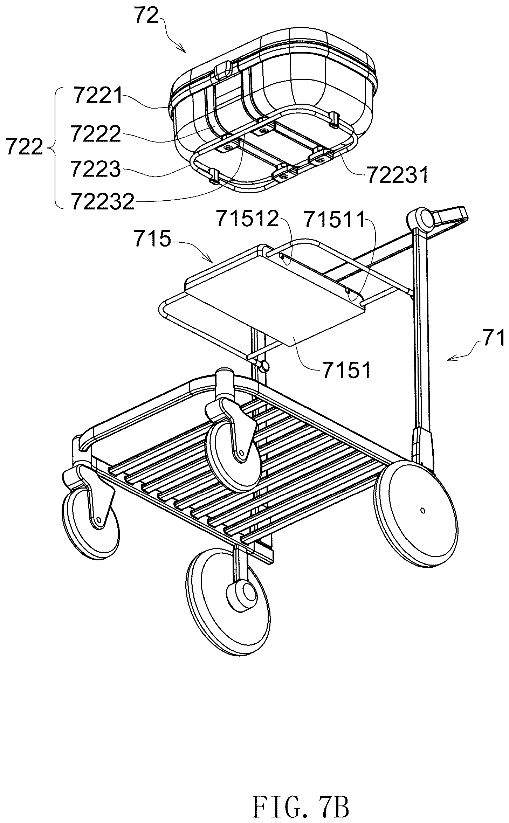

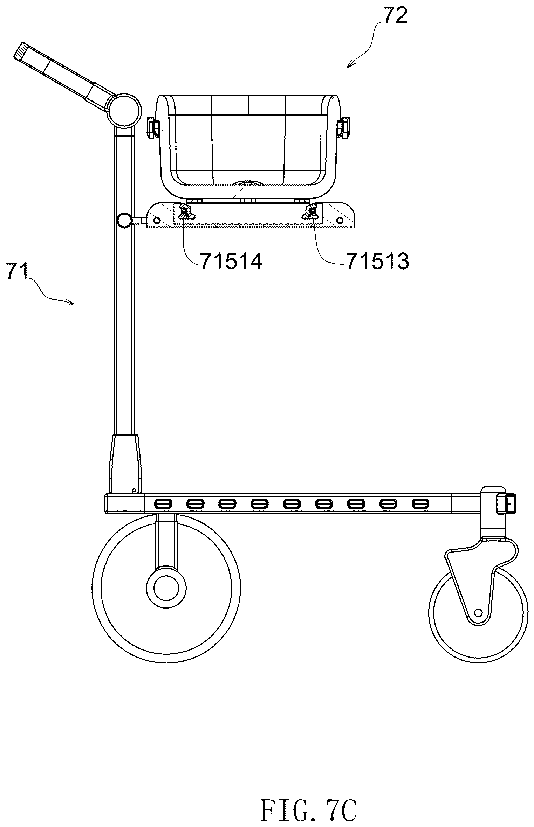

Figs. 7A to 7C are schematic appearance views of an animal transporting cart according to one embodiment of the present disclosure, in which Figs. 7A and 7B show the appearance of the animal transporting cart in a state where the animal carrier is separated from the cart body from different perspectives, and Fig. 7C shows a detailed structure of the supporting part of the embodiment in a schematic side cross-sectional view of the animal transporting cart;

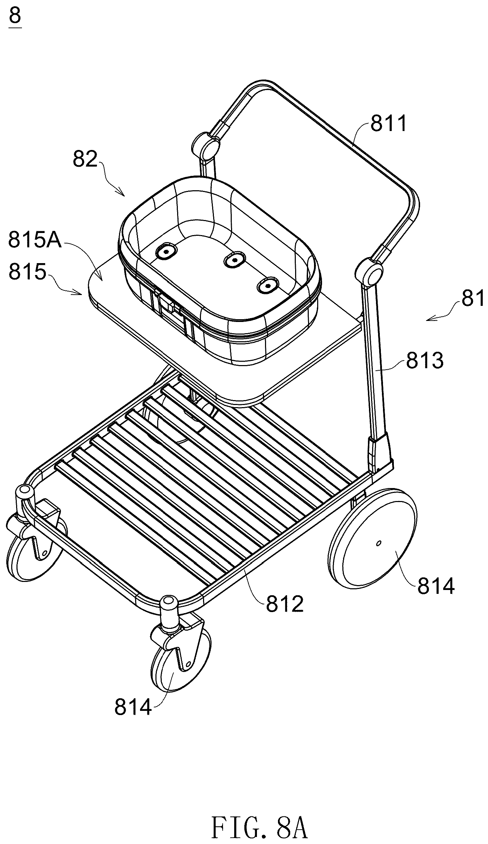

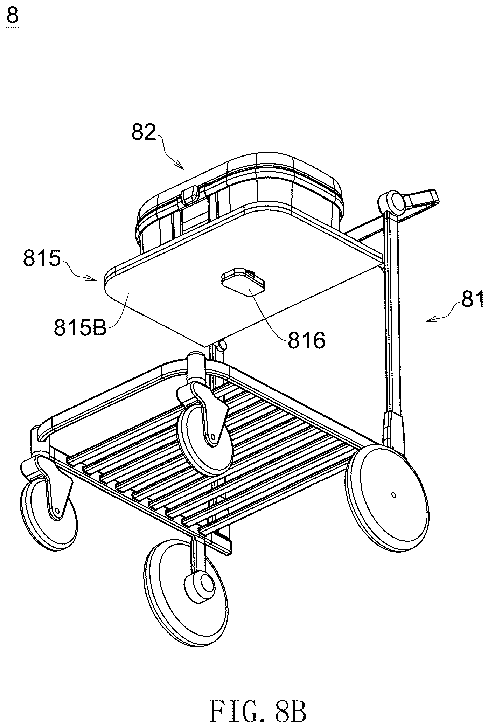

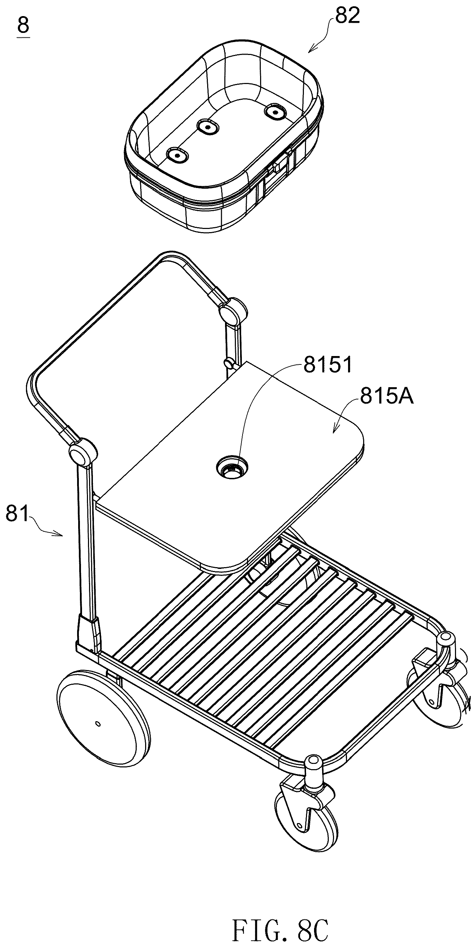

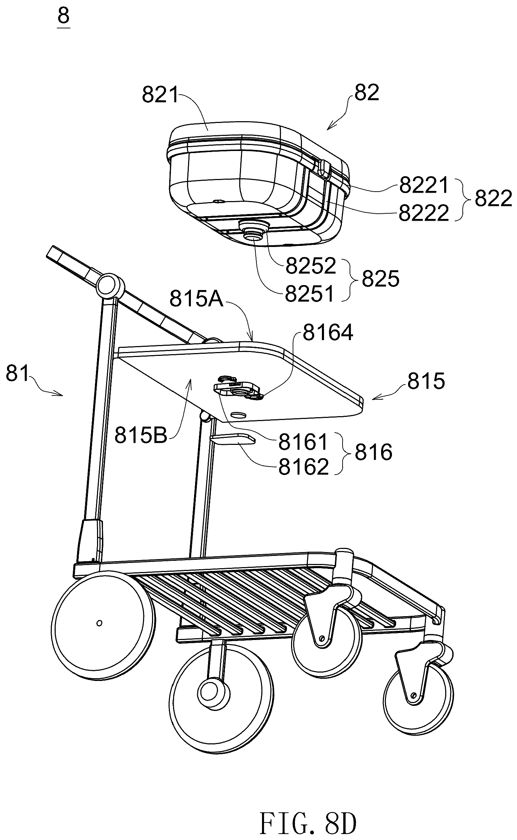

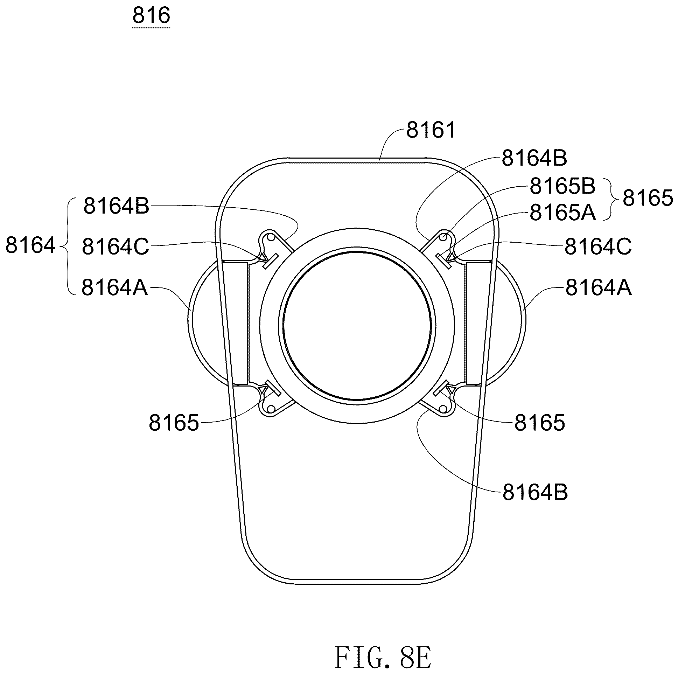

Figs. 8A to 8E are schematic appearance views of an animal transporting cart according to one embodiment of the present disclosure, in which Figs. 8A and 8B show the appearance of the animal transporting cart in a state where the animal carrier is combined with the cart body from different perspectives, Figs. 8C and 8D show the appearance of the animal transporting cart in a state where the animal carrier is separated from the cart body from different perspectives, and Fig. 8E schematically illustrates a detailed structure of the connecting buckle of the embodiment;

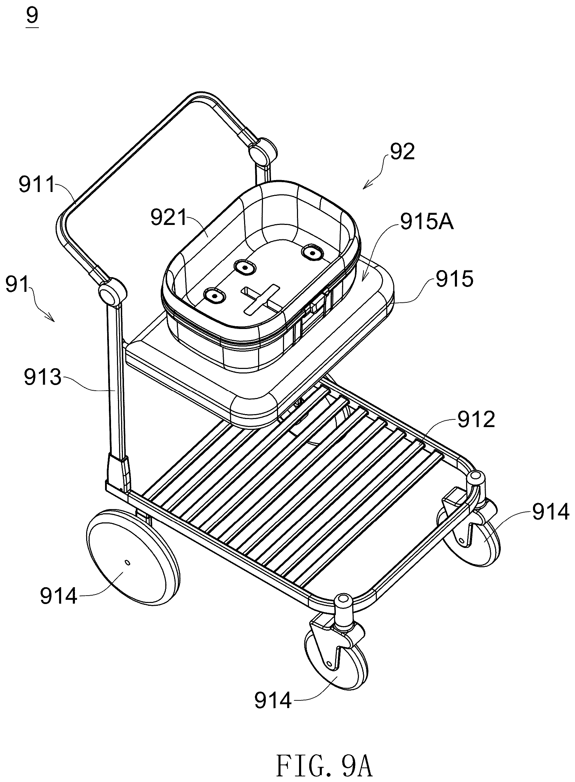

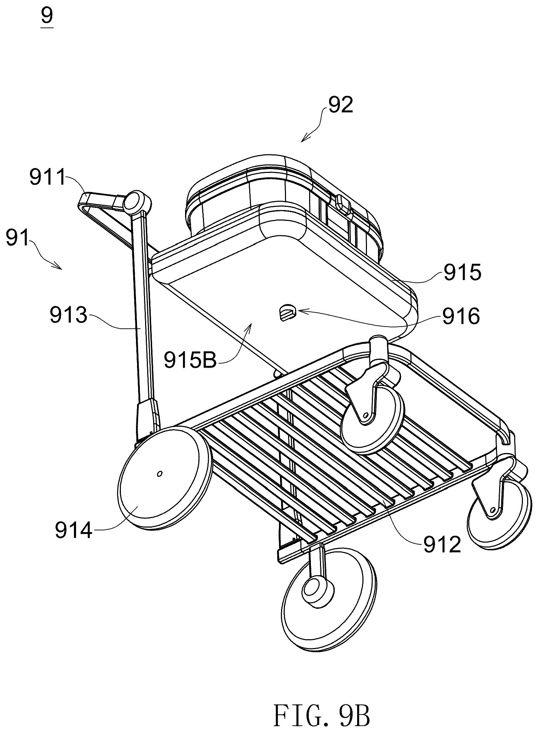

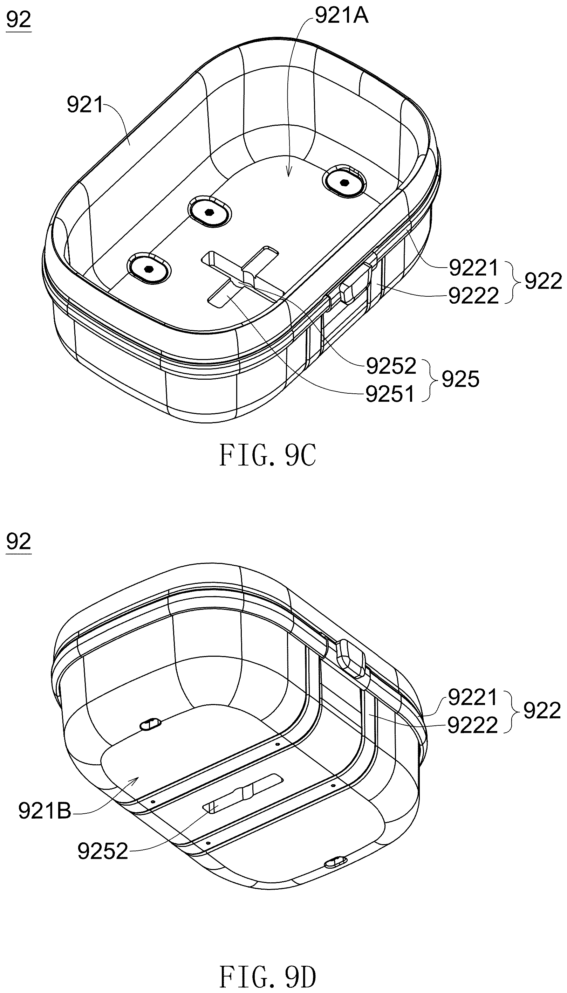

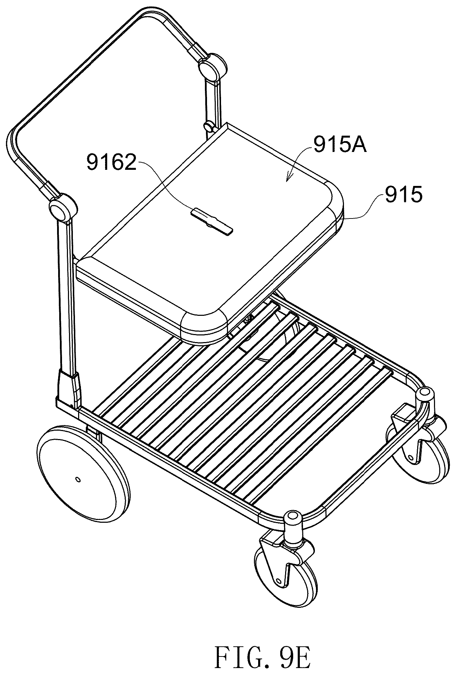

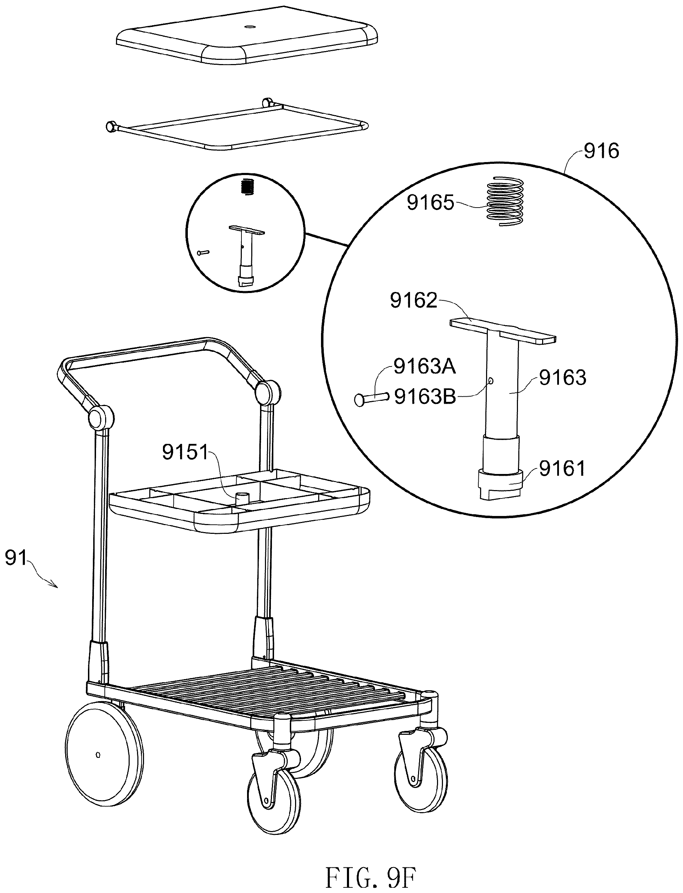

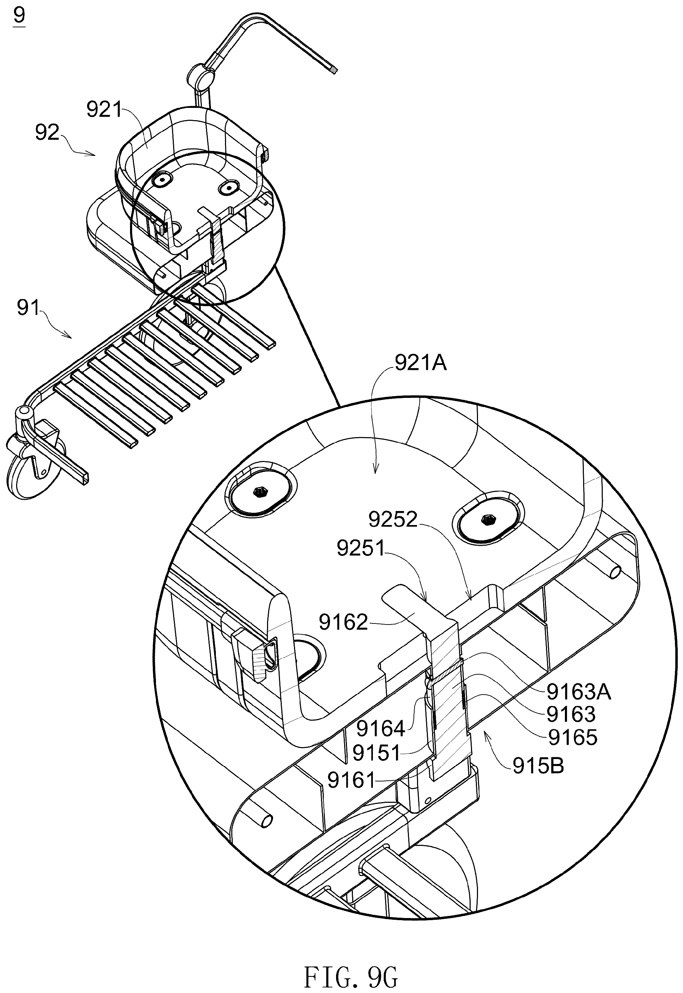

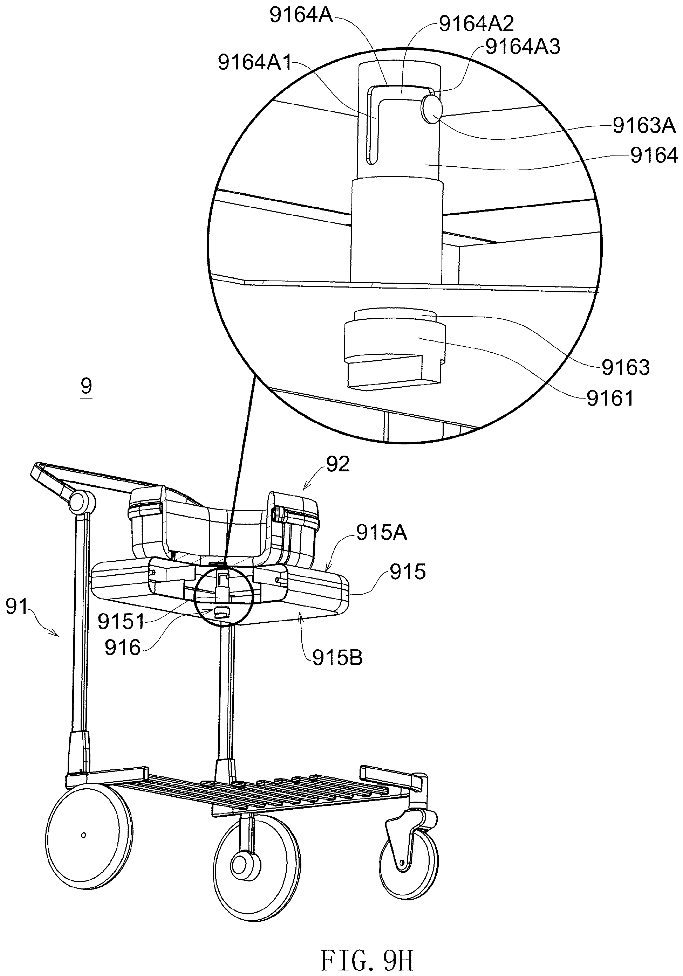

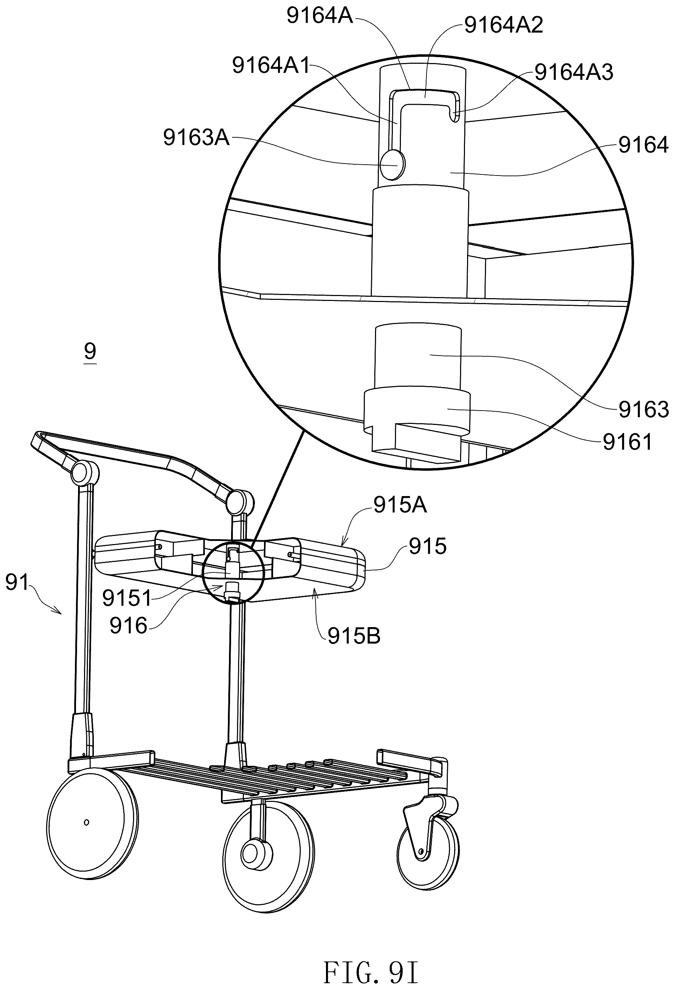

Figs. 9A to 9I are schematic appearance views of an animal transporting cart according to one embodiment of the present disclosure, in which Figs. 9A and 9B show the appearance of the animal transporting cart in a state where the animal carrier is combined with the cart body from different perspectives, Figs. 9C and 9D show an external view of the animal carrier of the embodiment at different angles, Fig. 9E shows the appearance of the cart body of the embodiment, Fig. 9F shows an exploded schematic view of the cart body of the embodiment, Figs. 9G and 9H schematically illustrate the combination of the animal carrier with the cart body of the embodiment in partially enlarged cross-sectional views of the animal transporting cart, and Fig. 9I schematically illustrates the separation of the cart body from the animal carrier of the embodiment in partially enlarged cross-sectional views of the animal transporting cart;

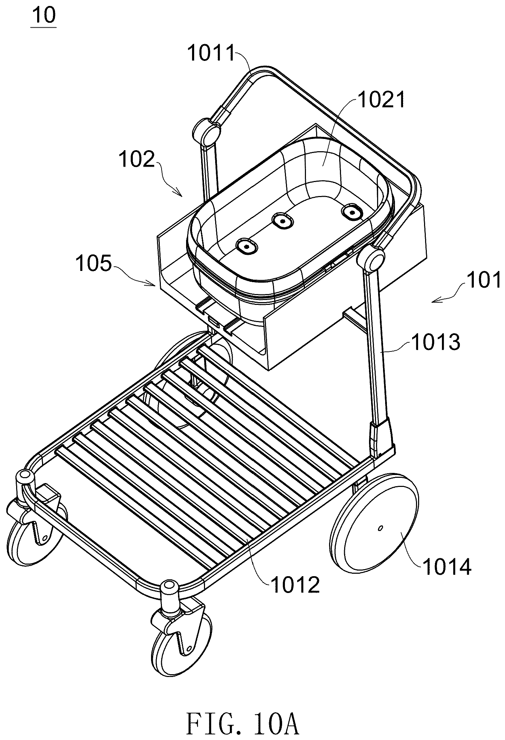

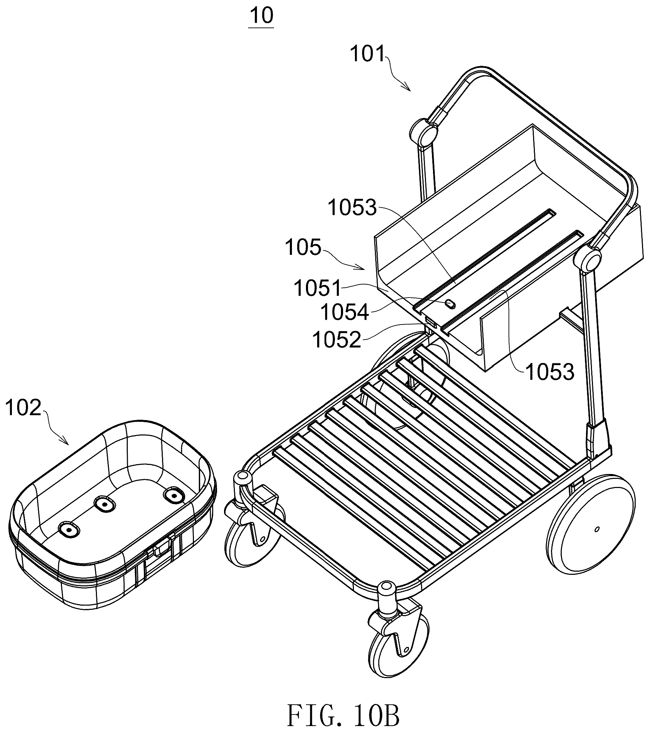

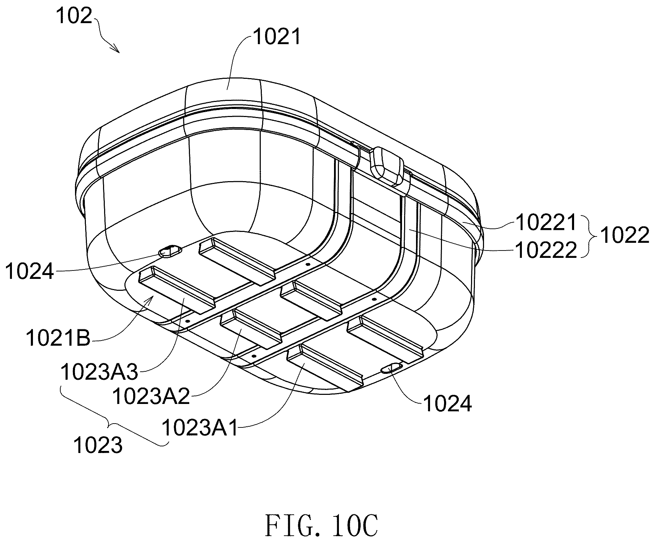

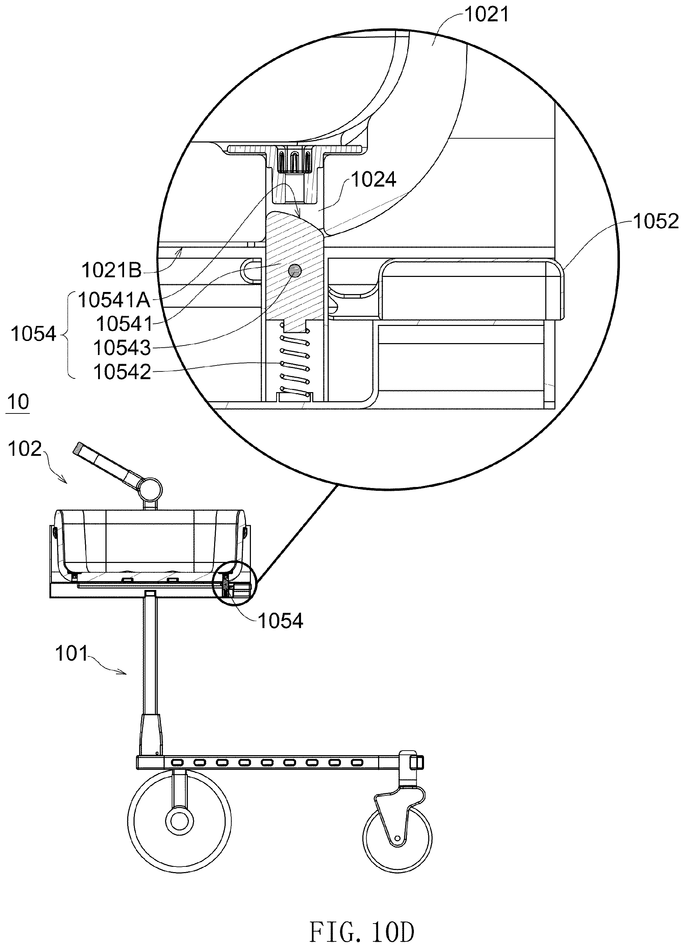

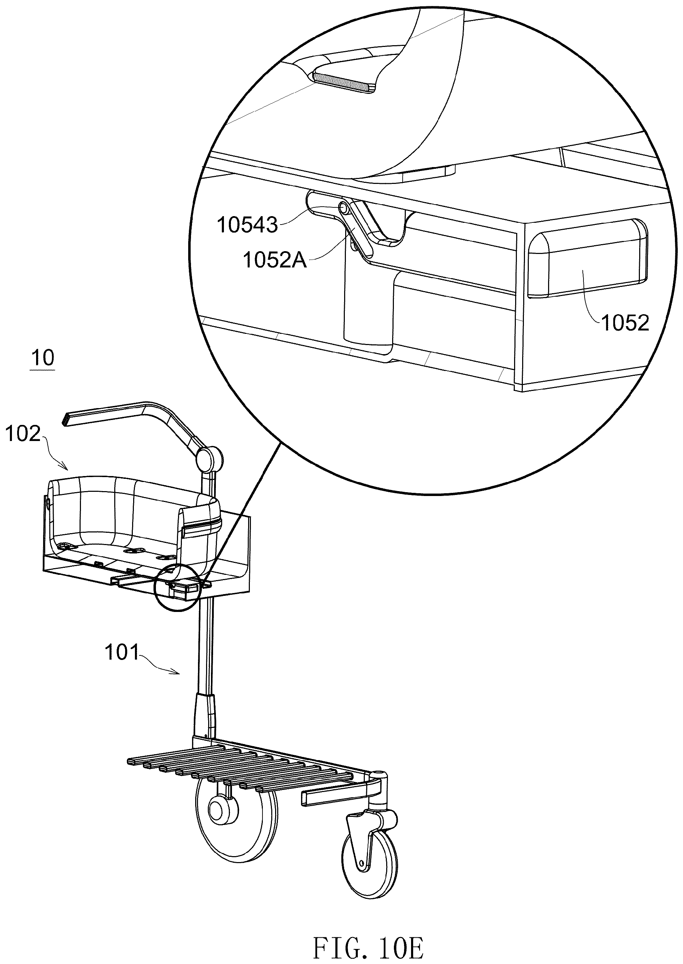

Figs. 10A to 10E are schematic appearance views of an animal transporting cart according to one embodiment of the present disclosure, in which Figs. 10A and 10B respectively show the appearance of the animal transporting cart in a state where the animal carrier is combined with and separated from the cart body, Fig. 10C shows the appearance of the animal carrier of the embodiment, and Figs. 10D and 10E show a detailed structure of the positioning part of the embodiment in partially enlarged cross-sectional views of the animal transporting cart; and

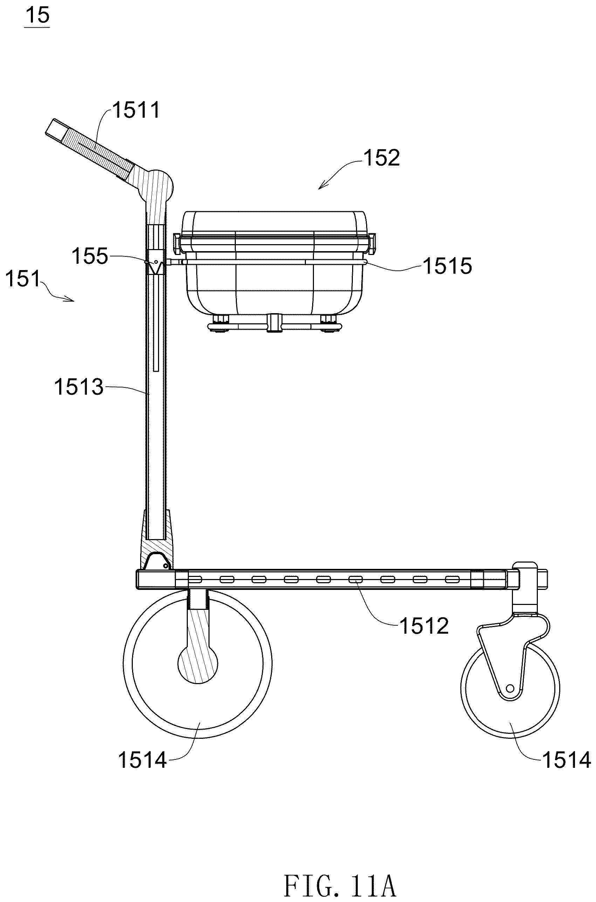

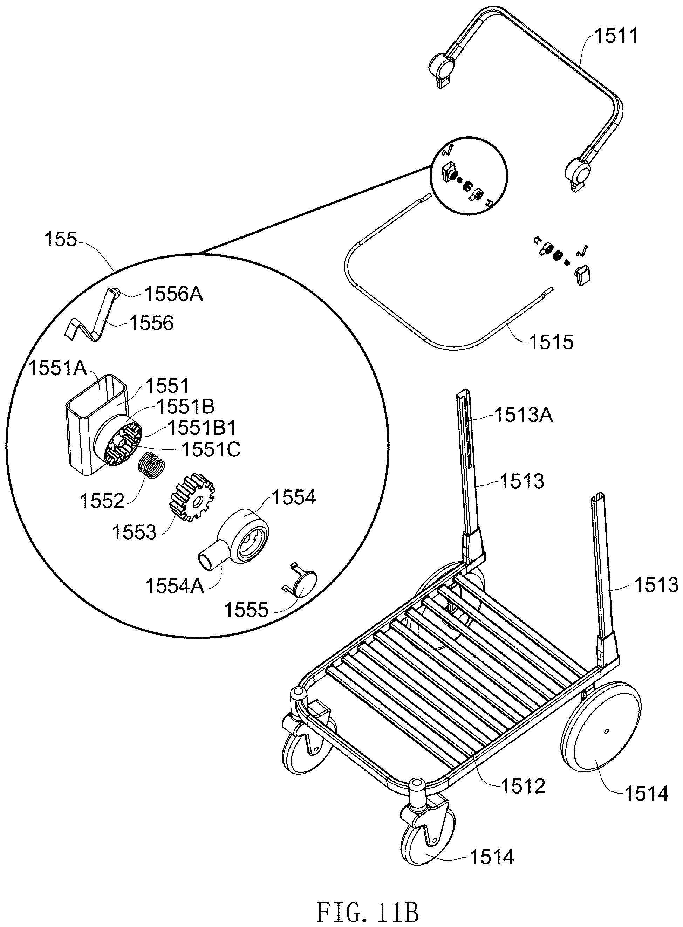

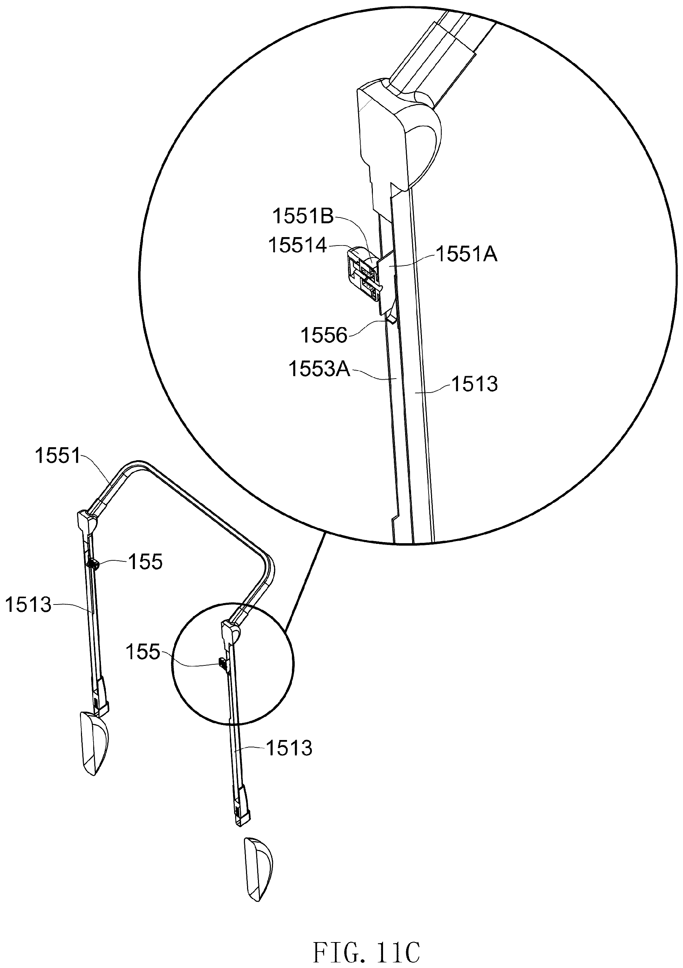

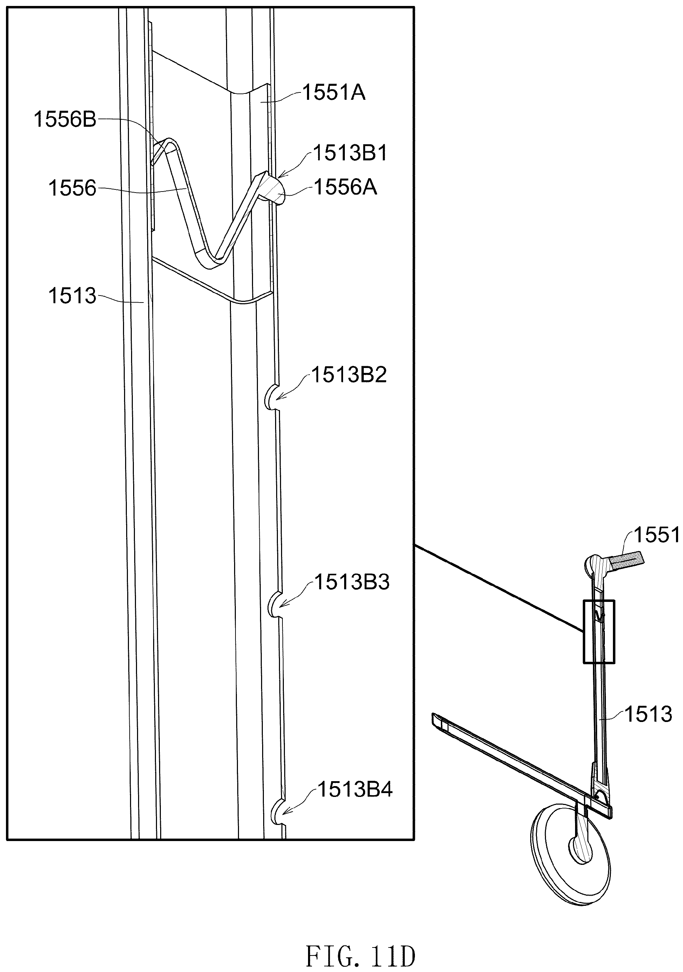

Figs. 11A to 11D are schematic appearance views of an animal transporting cart according to one embodiment of the present disclosure, in which Fig. 11A illustrates an adjusting device of the embodiment in a schematic side cross-sectional view of the animal transporting cart, Fig. 11B shows a detailed structure of the adjusting device of the embodiment in an exploded schematic view, and Figs. 11C and 11D respectively show the adjusting device and the frame vertical rod of the embodiment in partially enlarged schematic views.

### LIST OF REFERENCE NUMERALS:

1 animal transporting cart
11 cart body
111 cart handle
112 storage layer
113 frame vertical rod
114 wheel member
115 supporting part
12 animal carrier
121 box body
122 bracket device
1221 first bracket
1222 second bracket
1223 third bracket
123 connecting structure
22 animal carrier
221 box body
222 bracket device
2221 first bracket
2222 second bracket
2223 third bracket
223 connecting structure
224 adjusting bracket
2241 U-shaped inner tube
22411 guide groove
22412 fixing hole
22413 guide groove
22414 fixing hole
22415-22418 pin member
2242 U-shaped inner tube
22421 guide groove
22422 fixing hole
22423 guide groove
22424 fixing hole
22425-22428 pin member
2243 connecting outer tube
22431 fixing hole
22432 fixing hole
2244 connecting outer tube
22441 fixing hole
22442 fixing hole
22451 elastic element
22452 elastic element
3 animal transporting cart
31 cart body
311 cart handle
312 storage layer
313 frame vertical rod
314 wheel member
315 supporting part
3151 connecting structure
3151A engaging groove
3152 connecting structure
32 animal carrier
325 connecting structure
3251 connecting base body
3252 engaging pin
3252A abutting surface
3253 elastic element
3254 operation key
4 animal transporting cart
41 cart body
411 cart handle
412 storage layer
413 frame vertical rod
414 wheel member
415 supporting part
4151 supporting frame
4152 upper cover plate
4152A opening
4153 lower cover plate
4154 positioning mechanism component
41541 operation key
41542 driving steel wire
41543 positioning bump
41543A positioning end
41544 positioning slider
41545 guiding member
41546 elastic element
42 animal carrier
421 box body
422 bracket device
425 connecting groove
5 animal transporting cart
51 cart body
511 cart handle
512 storage layer
513 frame vertical rod
514 wheel member
515 supporting part
52 animal carrier
521 box body
5211 long side peripheral wall
522 bracket device
523 connecting structure
6 animal transporting cart
61 cart body
611 cart handle
612 storage layer
613 frame vertical rod
614 wheel member
615 supporting part
6151 fixed base
61511 fixed guide groove
61512 fixed guide groove
62 animal carrier
621 box body
622 bracket device
6221 first bracket
6222 second bracket
6223 third bracket
62231 long rods
62232 long rods
7 animal transporting cart
71 cart body
711 cart handle
712 storage layer
713 frame vertical rod
714 wheel member
715 supporting part
7151 fixed base
71511 fixed guide groove
71511A, 71511B end
71512 fixed guide groove
71512A, 71512B end
71513 clamping hook
71514 clamping hook
72 animal carrier
721 box body
722 bracket device
7221 first bracket
7222 second bracket
7223 third bracket
72231 long rod
72232 long rod
8 animal transporting cart
81 cart body
811 cart handle
812 storage layer
813 frame vertical rod
814 wheel member
815 supporting part
815A supporting surface
8151 through opening
816 connecting structure
8161 buckle fixed seat
8162 cover body
8164 unlocking structure
8164A operating part
8164B engaging arm
8164C stopper
8165 interference structure
8165A first interference structure
8165B second interference structure
82 animal carrier
821 box body
822 bracket device
8221 first bracket
8222 second bracket
825 connecting structure
8251 buckling part
8252 engaging part
9 animal transporting cart
91 cart body
911 cart handle
912 storage layer
913 frame vertical rod
914 wheel member
915 supporting part
915A top surface (supporting surface)
915B bottom surface (operating surface)
916 rotating buckle
9161 knob
9162 connecting bump
9163 inner rod
9163A locking member
9164 outer tube
9164A positioning groove
9164A1 longitudinal groove
9164A2 transverse groove
9164A3 positioning end
9165 elastic element
92 animal carrier
921 box body
921A bearing surface
921B bottom surface
922 bracket device
9221 first bracket
9222 second bracket
925 connecting structure
9251 recess
9252 penetrating part
10 animal transporting cart
101 cart body
1011 cart handle
1012 storage layer
1013 frame vertical rod
1014 wheel member
102 animal carrier
1021 box body
1021B bottom surface
1022 bracket device
10221 first bracket
10222 second bracket
1023 guide rail
1023A1~1023A3 guide rail section
1024 positioning groove
105 supporting part
1051 fixed base
1052 operation key
1052A guide groove
1053 guide groove
1054 positioning part
10541 positioning bump
10542 elastic element
10543 driving pin
15 animal transporting cart
151 cart body
1511 cart handle
1512 storage layer
1513 frame vertical rod
1513A guide groove
1513B1~1513B4 positioning hole
1514 wheel member
1515 supporting part
152 animal carrier
155 adjusting device
1551 adjusting base
1551A first accommodating part
1551B second accommodating part
1551B1 inner contour
1551C central pivot axis
1552 elastic element
1553 gear member
1554 connecting member
1555 fixed cover sheet
1556 positioning member
1556A positioning end
1556B abutting end

### DETAILED DESCRIPTION

The following is a description of the technical concepts and connotations of the present disclosure with reference to the accompanying drawings and exemplary embodiments. In the accompanying drawings or description, the same or similar parts are represented by the same or corresponding element symbols; furthermore, the accompanying drawings are drawn for ease of understanding, and the sizes and shapes of the elements in the accompanying drawings are not the actual sizes or proportional to the actual sizes of the elements.

In addition, the description about the accompanying drawings and embodiments below does not mean that the implementation scope of the present disclosure is limited to a single implementation; other implementations are also possible by replacing a part or all of the elements described or shown. In addition, in the case where certain elements of the disclosed embodiments can use part or all of known elements, in some instances, only such known parts of the elements necessary for understanding the implementations of the present disclosure are described, and detailed descriptions of other parts of these known elements are omitted to avoid confusing the concepts and implementations of the present disclosure.

Referring to Figs. 1A and 1B, which are schematic appearance views of an animal transporting cart 1 according to one embodiment of the present disclosure. The animal transporting cart 1 of the embodiment includes a cart body 11 and an animal carrier 12, where the animal carrier 12 is stably coupled to the cart body 11 in a detachable manner. The cart body 11 may have a similar configuration to that of the existing shopping cart, for example, it includes a cart handle 111, a storage layer 112, a frame vertical rod 113 which is connected to the cart handle 111 and the storage layer 112, a wheel member 114 disposed at the bottom of the cart body 11, and the like. In this embodiment, the cart body 11 also includes a supporting part 115, the supporting part 115 is disposed parallel to the storage layer 112 and connected to the frame vertical rod 113 at a position higher than the storage layer 112; the supporting part 115 is used for carrying the animal carrier 12 and stabilizes its connection.

Specifically, in this embodiment, the storage layer 112 is disposed at a lower position of the cart body 11 close to the ground and connected to a lower end of the frame vertical rod 113; the supporting part 115 includes a supporting frame, which may be, for example, a frame structure formed by four side parts or side rods, or a hollow frame, and is made of a rigid material (e.g., stainless steel, metal, hard plastic, etc.) that is strong enough to support the animal carrier 12 and the weight of the animal carried thereby. The supporting part 115 is disposed at an upper position of the cart body 11 relatively further away from the ground, and is connected to an upper end of the frame vertical rod 113 close to the cart handle 111. In other words, the animal carrier 12 of the embodiment forms an upper-and-lower-layer-structure with the storage layer 112 of the cart body 11 when being connected to the supporting part 115, so that when a user (e.g., a pet owner or a pet caregiver) is shopping or needs to carry articles, the user may place his/her pet in the upper animal carrier 12 of the animal transporting cart 1 and place the purchased or carried articles in the lower storage layer 112.

Referring to Fig. 1C, which is a schematic appearance view of the animal transporting cart 1 according to the embodiment from a different perspective. In this embodiment, the animal carrier 12 includes a box body 121 and a bracket device 122. The box body 121 is composed of a bottom and a peripheral wall connected to the bottom, and forms a carrying space for carrying animals therein. The bracket device 122 includes a first bracket 1221 and a second bracket 1222 hooped at outer side of the peripheral wall of the box body 121 and having a contour corresponding to the outer side of the peripheral wall of the box body 121, and the first bracket 1221 and the second bracket 1222 provide a supporting force so as to increase the strength of the box body 121 (the animal carrier 12) for carrying the animal; the bracket device 122 also includes a third bracket 1223 coupled to the outer side of the bottom of the box body 121 for installing the animal carrier 12 to, for example, a vehicle fixed base or a cart fixed base (not shown). The first bracket 1221, the second bracket 1222 and the third bracket 1223 are connected to each other to form the bracket device 122 of the animal carrier 12; as described above, the bracket device 122 is coupled to the box body 121 at the outer sides of the peripheral wall and the bottom of the box body 121.

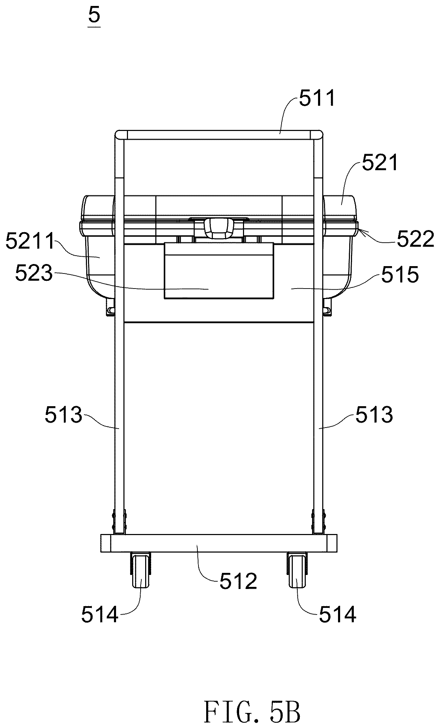

As shown in Fig. 1C and its partially enlarged view, in this embodiment, the animal carrier 12 includes a connecting structure 123 for cooperating with the supporting part 115 of the cart body 11 to stably connect the animal carrier 12 and the cart body 11. In this embodiment, the connecting structure 123 is, for example, a pair of fixed lugs, and only one of the fixed lugs is shown in the figure for shielding. As shown in Fig. 1C, the connecting structures 123 are located at two opposite sides at the outer side of the peripheral wall of the box body 121 of the animal carrier 12, are hung to the corresponding two opposite side parts of the supporting part 115 of the cart body 11, and are stably connected to the two opposite side parts of the supporting part 115 under the downward pushing force applied to the box body 121 by the user. In this embodiment, the connecting structure 123 may be a separate member from the box body 121, which is disposed on two opposite short sides of the first bracket 1221, by which the box body 121 is hung on two corresponding short sides of the supporting part 115 of the cart body 11, so as to be connected with the cart body 11. Alternatively, the connecting structure 123 may be directly formed with the box body 121 to extend from the peripheries of two opposite sidewalls of the box body 121, so that the box body 121 is hung on two corresponding sides of the supporting part 115 of the cart body 11, thereby being stably connected with the cart body 11. In another embodiment, the connecting structure 123 can also be located at the opposite long sides of the animal carrier 12 to be hung on the corresponding two long sides of the supporting part 115 of the cart body 11, and the present disclosure does not limit the position of the connecting structure 123 as long as the animal carrier 12 may be firmly coupled with the cart body 11. In addition, although the connecting structure 123 shown in Figs. 1A to 1C is exemplified by a pair of fixed lugs, the present disclosure does not limit the number of the connecting structures 123, and in another embodiment, the connecting structure 123 of the animal carrier 12 may include at least one fixed lug, for example, in the embodiment shown in Figs. 5A and 5B, the animal carrier 52 has only one fixed lug for cooperating with the supporting part 515 of the cart body 51 (details will be further described below), or the connecting structure 123 may include at least two fixed lugs, for example, respective fixed lugs are disposed on at least two sides, at least three sides, or four sides of the animal carrier 12, so as to more firmly couple the animal carrier 12 with the cart body 11, and the present disclosure is not limited to the implementation of the connecting structure 123.

According to this embodiment, the connecting structure 123 may be made of a rigid material with elasticity, for example, metal, plastic, wood, etc.; the connecting structure 123 may be disposed on the bracket device 122 (e.g., the first bracket 1221) as a separate member from the box body 121, or formed integrally with the bracket device 122 (e.g., the first bracket 1221), or directly formed integrally with the box body 121.

According to this embodiment, the connecting structure 123 is provided for a user to easily and stably connect the animal carrier 12 to the cart body 11 of the animal transporting cart 1, and is also convenient for the user to remove the animal carrier 12 and detach from the cart body 11 according to actual application scenarios.

Referring to Figs. 2A and 2B, which are schematic appearance views of an animal carrier 22 of an animal transporting cart according to one embodiment of the present disclosure from different perspectives. The animal carrier 22 has a structure and a composition similar to those of the aforementioned animal carrier 12, and includes a box body 221 and a bracket device 222, and the bracket device 222 is mainly composed of a first bracket 2221, a second bracket 2222 and a third bracket 2223 connected to each other, and is coupled to the box body 221. The animal carrier 22 may also be stably connected to the cart body of the animal transporting cart (e.g., the cart body 11 described above) by the connecting structure 223 hanging to the cart body of the animal transporting cart.

The difference between the animal carrier 22 of this embodiment and the aforementioned animal carrier 12 is that the animal carrier 22 also includes an adjusting bracket 224, and at least one pair of connecting structures 223 of the animal carrier 22 are disposed on opposite side parts of the adjusting bracket 224; the adjusting bracket 224 has a telescopic structure to form a pair of movable sides 224A, so as to adjust the distance between the two connecting structures 223 (hereinafter also referred to as "connecting distance") corresponding to the size of the supporting part and/or the supporting frame of the cart body. In this embodiment, the long side of the adjusting bracket 224 is a movable side 224A having a telescopic structure, and the short side of the adjusting bracket 224 is a fixed side provided with a connecting structure 223.

In detail, referring to Figs. 2C to 2E, in which Figs. 2C and 2D show the exploded structure of the adjusting bracket 224 of the animal carrier 22 from different perspectives, and Fig. 2E is a cross-sectional schematic view of the movable side 224A of the adjusting bracket. In this embodiment, the adjusting bracket 224 has a telescopic structure, and mainly includes a pair of U-shaped inner tubes 2241, 2242 and a pair of connecting outer tubes 2243, 2244. The connecting outer tubes 2243 and 2244 are sleeved with the connecting ends of the two U-shaped inner tubes 2241 and 2242 with two ends thereof, respectively, and are fixedly disposed outside the opposite sidewalls of the box body 221 of the animal carrier 22, for example, fixedly disposed outside the sidewalls of the long side of the box body 221; the bottom sides of the U-shaped inner tubes 2241, 2242 are provided with their respective connecting structures 223 (e.g., fixed lugs). The connecting outer tube 2243 is formed with fixing holes 22431, 22432 on the connecting ends near the U-shaped inner tubes 2241, 2242, and the connecting outer tube 2244 is formed with fixing holes 22441, 22442 on the connecting ends near the U-shaped inner tubes 2241, 2242. The U-shaped inner tube 2241 is formed with a guide groove 22411 and a fixing hole 22412 on the connecting end near the connecting outer tube 2243, and is formed with a guide groove 22413 and a fixing hole 22414 on the connecting end near the connecting outer tube 2244. The U-shaped inner tube 2242 is formed with a guide groove 22421 and a fixing hole 22422 on the connecting end near the connecting outer tube 2243, and is formed with a guide groove 22423 and a fixing hole 22424 on the connecting end near the connecting outer tube 2243. The adjusting bracket 224 also includes pin members 22415 to 22418, pin members 22425 to 22428, and elastic elements 22451, 22452. The elastic elements 22451, 22452 are disposed inside the connecting outer tubes 2243, 2244, respectively, and connected between the connection ends of the U-shaped tubes 2241, 2242. In this embodiment, two ends of the elastic element 22451 are connected with the pin members 22416, 22426, respectively, one ends of the pin members 22416, 22426 are inserted into and fixed in the fixing hole 22412 of the U-shaped inner tube 2241 and the fixing hole 22422 of the U-shaped inner tube 2242, respectively, and the other ends movably abut against the inner wall of the connecting outer tube 2243; similarly, two ends of the elastic element 22452 are connected with the pin members 22418, 22428, respectively, one ends of the pin members 22418, 22428 is inserted into and fixed in the fixing hole 22414 of the U-shaped inner tube 2241 and the fixing hole 22424 of the U-shaped inner tube 2242, and the other ends movably abut against the inner wall of the connecting outer tube 2244. One ends of the pin members 22415, 22417, 22425 and 22427 are inserted and fixed in fixing holes 22431, 22441, 22432 and 22442 of the connecting outer tube, respectively, so as to connect and fix the inner and outer tubes; the other ends are abutted against the guide grooves 22411, 22413, 22421 and 22423, respectively, to form a movable side 224A of the adjusting bracket 224.

According to this embodiment, when the animal carrier 22 is installed to the cart body (e.g. the aforementioned cart body 11), the adjusting bracket 224 of the animal carrier 22 can be adjusted accordingly according to the size of the supporting part and/or the supporting frame (e.g., the aforementioned supporting part 115) of the cart body, so that the size of the adjusting bracket 224 is adapted to the size of the supporting part, and the connecting structure 223 disposed on the adjusting bracket 224 is connected to the supporting part at a proper position and stably connected to the cart body. In this embodiment, the size of the adjusting bracket 224 is also referred to as "width of the adjusting bracket", which means the distance between the opposite side parts of the adjusting bracket provided with the connecting structure. In this embodiment, the size of the supporting part or the supporting frame is also referred to as "width of the supporting part" or "width of supporting frame", which means the distance between the opposite side parts of the supporting part or the supporting frame for engaging the animal carrier. In other words, the width of adjusting bracket may be increased or decreased corresponding to the width of the supporting part or the width of the supporting frame by the telescopic structure of the movable side 224A of the adjusting bracket 224, so that the connecting structure 223 disposed on the adjusting bracket 224 is connected to the supporting part or the supporting frame of the cart body at a proper position.

Further, when adjusting the width of the bracket, the user pulls the two U-shaped inner tubes 2241, 2242 outwards, since the pin members 22416, 22426 and the pin members 22414, 22424 are respectively and fixedly connected between the two U-shaped inner tubes 2241, 2242, and the pin members 22416, 22426 and the pin members 22414, 22424 are respectively connected with the elastic elements 22451, 22452, the U-shaped inner tubes 2241, 2242 may move relative to the connecting outer tubes 2243, 2244 (at this time, the pin members 22416, 22426 and the pin members 22414, 22424 also move in the connecting outer tubes 2243, 2244, where the pin members 22416, 22426 move in the direction away from each other, and the pin members 22414, 22424 also move in the direction away from each other), and can be reset by the resilient force of the elastic elements 22451, 22452, respectively; since the U-shaped inner tubes 2241, 2242 are pulled to move outward, the guide grooves 22411, 22413 of the U-shaped inner tube 2241 and the guide grooves 22421, 22423 of the U-shaped inner tube 2242 are respectively displaced outward under the guide of the pin members 22415, 22417, 22425, 22427 (at this time, the pin members 22415, 22425 and the pin members 22417, 22427 are fixedly connected with the connecting outer tubes 2243, 2244, respectively, so that the positions relative to the connecting outer tubes 2243, 2244 are fixed, the pin members 22416, 22418 respectively approach the pin members 22415, 22417 and the pin members 22426, 22424 respectively approach the pin members 22425, 22427), and the elastic elements 22451, 22452 are stretched by the outward movement of the U-shaped inner tubes 2241, 2242, thereby enlarging the width of the adjusting bracket to fit the supporting part with corresponding size, and adjusting the distance between the pair of connecting structures 223 (i.e., "connecting distance"). In this embodiment, the connecting structure 223 can be, for example, a fixed lug, which is hung to the two opposite sides of the supporting part at a proper connecting distance in response to the adjustment of the adjusting bracket 224. In this embodiment, the connecting structure 223 is connected with the supporting part of the cart body, so that the size of the adjusting bracket 224 can be kept; when the connecting structure 223 is disconnected from the supporting part, the U-shaped inner tubes 2241, 2242 move (inward) toward each other due to the restoring force of the elastic elements 22451, 22452 to return to the original position, and the adjusting bracket width of the adjusting bracket 224 returns to the original size. By means of this embodiment, no matter whether the size of the box body 221 of the animal carrier 22 can be matched with the connecting bracket of the cart body, the animal carrier 22 can be adjusted by the adjusting bracket 224 to make the connecting distance between the pair of connecting structures 223 match with the distance between the two opposite sides of the supporting part, so as to connect to the supporting part at a proper position and stably connect to the cart body, thereby increasing the matching elasticity and application elasticity of the animal carrier and the cart body.

Referring to Figs. 3A and 3B, which show schematic appearance views of an animal transporting cart 3 according to one embodiment of the present disclosure. The animal transporting cart 3 of this embodiment has a structure and a composition similar to those of the aforementioned animal transporting cart 1, and includes a cart body 31 and an animal carrier 32, where the animal carrier 32 is stably connected to the cart body 31 in a detachable manner. Similarly, the cart body 31 includes a cart handle 311, a storage layer 312, a frame vertical rod 313 connecting the cart handle 311 and the storage layer 312, a wheel member 314 disposed at the bottom of the cart body 31, and a supporting part 315 (e.g., a supporting frame); the animal carrier 32 includes a box body 321 and a bracket device 322, and its specific structure is similar to the aforementioned animal carrier.

The difference between the animal transporting cart 3 of this embodiment and the aforementioned animal transporting cart 1 is that the animal carrier 32 of the animal transporting cart 3 is stably connected to the cart body 31 by means of snap-in connection. As shown, in this embodiment, the supporting part 315 of the cart body 31 includes, in addition to a supporting frame, connecting structures 3151 disposed on two opposite short sides of the supporting frame, the connecting structures 325 are disposed outside the peripheral walls of the two opposite short sides of the animal carrier 32, and the connecting structures 325 of the animal carrier 32 and the connecting structures 3151 of the supporting part 315 are matched so as to be snapped-in, thereby forming a stable coupling between the animal carrier 32 and the cart body 31. In this embodiment, the connecting structure 3151 may be a connecting buckle, and the connecting structure 325 is a connecting base capable of partially accommodating the connecting structure 3151.

Referring to Figs. 3B and 3C, which show partially enlarged cross-sectional views of the animal transporting cart 3 of this embodiment for illustrating the detailed structures of the connecting structure 325 (e.g., connecting base) and the connecting structure 3151 (e.g., connecting buckle) of this embodiment. The connecting structure 325 is disposed outside of the peripheral walls of the two opposite short sides of the box body 321 of the animal carrier, and includes a connecting base body 3251, the connecting base body 3251 has at least a part of a contour 3251A matching with an inner contour 3151A of the connecting structure 3151. The connecting structure 325 also includes an engaging pin 3252, one end of which is matched with the engaging groove 3151B of the connecting structure 3151, and the other end of which is connected with an elastic element 3253, the elastic element 3253 abuts against the connecting base body 3251, the elastic element 3253 is used for providing a driving force to move the engaging pin 3252 constantly towards the engaging groove 3151A. A concave abutting surface 3252A is formed on the engaging pin 3252. The connecting structure 325 also includes an operation key 3254, a lower portion of the operation key 3254 contacts with the abutting surface 3252A of the engaging pin 3252, and an upper portion of the operation key 3254 protrudes out of the connecting base body 3251 for pressing operation by a user. When the connecting structure 325 of the animal carrier 32 is to be detached from the connecting structure 3151 on the supporting part 315 of the cart body 31, the user can press the operation key 3254 downward to contact and press the abutting surface 3252A of the engaging pin 3252, thereby forcing the engaging pin 3252 to move toward the rear end (toward the box body 321) and exit from the engaging groove 3151B of the connecting structure 3151, thereby releasing the snap-in connection between the connecting structure 325 and the connecting structure 3151, detaching the animal carrier 32 from the cart body 31.

Referring to Figs. 4A and 4B, which show schematic appearance views of an animal transporting cart 4 according to one embodiment of the present disclosure, in which Fig. 4A shows the cart appearance when the animal carrier 42 is installed to the cart body 41, and Fig. 4B shows the cart appearance when the animal carrier 42 is not installed to the cart body 41. In this embodiment, the cart body 41 of the animal transporting cart 4 has a structure and composition similar to those of the aforementioned embodiments, including a cart handle 411, a storage layer 412, a frame vertical rod 413 connecting the cart handle 411 and the storage layer 412, and a wheel member 414 disposed at the bottom of the cart body 41, etc.; the animal carrier 42 includes a box body 421 and a bracket device 422, and the specific structure thereof is similar to those of the aforementioned animal carriers. The difference between this embodiment and the aforementioned embodiments is that, in this embodiment, the connecting structures of the animal carrier 42 are a pair of connection grooves 425 formed on the outside of the peripheral walls of the two opposite short sides of the box body 421, and the connecting structure of the cart body 41 is a positioning end 41543A protruding from the inner side of the supporting part 415, and the connection grooves 425 are used for receiving and engaging the protruding positioning end 41543A, so as to be snapped to each other, so that the animal carrier 42 is stably coupled to the cart body 41.

In detail, referring to Figs. 4C and 4D, Fig. 4C is a top cross-sectional view of the animal transporting cart 4 of this embodiment, and Fig. 4D is an exploded schematic view of the animal carrier 42 and the supporting part 415, for illustrating the detailed structure of the connecting groove 425 of the animal carrier 42 and the supporting part 415 of the cart body 41 of this embodiment. In this embodiment, the supporting part 415 is mainly composed of an upper cover plate 4152 and a lower cover plate 4153 coupled together, an accommodating space is formed between the upper cover plate 4512 and the lower cover plate 4153, and the supporting frame 4151 is fixed therein. The upper cover plate 4152 is provided with a pair of opposing openings 4152A (only the opening 4152A is shown due to the shielding of the drawing) on the inward side thereof at positions corresponding to the pair of connecting grooves 425 on the outer side of the sidewall of the short side of the box body 421 of the animal carrier 42. The accommodating space of the supporting part 415 is provided with a positioning mechanism component 4154, and the positioning mechanism component 4154 includes an operation key 41541, a pair of driving steel wires 41542, a pair of positioning bumps 41543, a pair of positioning sliders 41544 and a pair of guiding members 41545. Both sides of the operation key 41541 are connected to the respective guiding member 41545 and the driving steel wire 41542; one end of the drive cable 41542 is connected to the guiding member 41545 and the other end is connected to the respective positioning slider 41544; the positioning slider 41544 abuts against the positioning bump 41543; the positioning bump 41543 has a positioning end 41543A protruding from the opening 4152A of the upper cover plate 4152 out of the supporting part 415, and the other end connected to the elastic element 41546; the elastic element 41546 provides a driving force to move the positioning bump 41543 to protrude constantly toward the opening 4152A.

When the animal carrier 42 is installed to the supporting part 415, the positioning end 41543A is forced by the elastic element 41546 to protrude out of the supporting part 415 through the opening 4152A, and engage with the pair of connecting grooves 425 on the outside of the sidewall of the short side of the box body 421 of the animal carrier 42, and the box body 421 may be positioned and locked to the supporting part 415 by engaging the positioning end 41543A with the connecting grooves 425, so that the animal carrier 42 may be stably coupled to the cart body 41. When the animal carrier 42 is to be detached from the cart body 41, the user pulls the operation key 41541 outward in the direction of the arrow A shown in Fig. 4C, and then activates the guiding member 41545 to drive the driving steel wire 41542, and in turn drives the positioning slider 41544 to displace to force the positioning bump 41543 to withdraw from the connecting groove 425, so that the connection of the box body 421 to the supporting part 415 can be released, and the animal carrier 42 may be detached from the cart body 41.

In this embodiment, the animal carrier 42 of the animal transporting cart 4 uses a pair of the connection grooves 425 on the outer side of the sidewall of the short side of the box body 421 as the connecting structure thereof, the cart body 41 uses the positioning bump 41543 disposed on the corresponding inner side of the supporting parts 415 as the connecting structure, and the animal carrier 42 is connected to the cart body 41 by the coupling of the positioning protrusion 41543 and the connection groove 425; however, the present disclosure is not limited thereto. In other embodiments, a positioning bump may also be disposed on the outer sides of the sidewall of the short side of the box body of the animal carrier, so as to be coupled with the connecting groove disposed on the corresponding inner side of the supporting part of the cart body, thereby connecting the animal carrier to the cart body.

Referring to Figs. 5A and 5B, which show schematic appearance views of an animal transporting cart 5 according to one embodiment of the present disclosure from different perspectives. The animal transporting cart 5 of this embodiment includes a cart body 51 and an animal carrier 52, where the animal carrier 52 is stably connected to the cart body 51 in a detachable manner. The cart body 51 may have a similar configuration to that of the existing shopping cart, for example, it includes a cart handle 511, a storage layer 512, a frame vertical rod 513 which is connected to the cart handle 511 and the storage layer 512, a wheel member 514 disposed at the bottom of the cart body 51, and the like. The storage layer 512 is located at a lower portion of the cart body 51 near the ground and connected to a lower end of the frame vertical rod 513. In this embodiment, the cart body 51 also includes a supporting part 515 (e.g., a connection backplate) substantially perpendicular to the storage layer 512 and connected to the two frame vertical rods 513, and located at the upper end of the frame vertical rod 113 and near the cart handle 511; that is, the supporting part 515 is located between the two frame vertical rods 513 at a position higher than the storage layer 512. In this embodiment, the supporting part 515 is a flat plate structure, i.e. a supporting plate (or "connecting backplate") connected between the two frame vertical rods 513.

In this embodiment, the animal carrier 52 includes a box body 521 and a bracket device 522, and the composition of the bracket device 522 is similar to those of the aforementioned bracket device. In this embodiment, the animal carrier 52 also includes a connecting structure 523 (e.g., fixed lug) disposed outside the peripheral wall of the box body 521, e.g., at the outer center of peripheral wall 5211 of the long side of the box body 521. In this embodiment, the animal carrier 52 is hung to the supporting part (connecting backplate) 515 of the cart body 51 through the connecting structure (fixed lug) 523, and is stably connected to the supporting part (connecting backplate) 515 under a downward pushing force applied to the box body 521 by the user, so as to be installed and fixed on the cart body 51 to form a stable connection, as shown in Fig. 5B.

According to this embodiment, the connecting structure 523 may be made of a rigid material with elasticity, such as metal, plastic, wood, etc., and has certain strength to stably support the box body 521 of the animal carrier 52 when the animal carrier 52 is installed to the cart body 51. In addition, the connecting structure 523 may be disposed on the bracket device 522 (e.g., the first bracket or the second bracket thereof) as a separate member from the box body 521, or directly integrally formed with the box body 521 to extend from the peripheral wall 5211 of the long side of the box body 521.

Referring to Fig. 6A, which shows a schematic appearance view of an animal transporting cart 6 according to one embodiment of the present disclosure. The animal transporting cart 6 has a structure and composition similar to those of the aforementioned animal transporting carts, including a cart body 61 and an animal carrier 62, the animal carrier 62 is stably connected to the cart body 61 in a detachable manner. In this embodiment, the cart body 61 has a structure and a composition similar to those of the aforementioned cart bodies, including a cart handle 611, a storage layer 612, a frame vertical rod 613 connecting the cart handle 611 and the storage layer 612, a wheel member 614 disposed at the bottom of the cart body 61, a supporting part 615, and the like. The difference between this embodiment and the aforementioned embodiments is that, in this embodiment, the supporting part 615 includes a fixed base 6151 for the animal carrier 62 to be installed and fixed thereon in addition to the supporting frame.

Referring to Figs. 6B and 6C, which show schematic appearance views of the animal transporting cart 6 from different perspectives to illustrate the cart body 61 and the animal carrier 62 of the animal transporting cart 6 of this embodiment. In this embodiment, the animal carrier 62 has a structure and composition similar to those of the aforementioned animal carrier, including a box body 621 and a bracket device 622, and the bracket device 622 includes a first bracket 6221 and a second bracket 6222 hooped on the outer edge of the box body 621 and having a contour corresponding to the outer edge of the box body 621 to increase the bearing strength of the animal carrier 62, and a third bracket 6223 disposed on the outer side of the bottom of the box body 621 for installing the animal carrier 62 to, for example, a vehicle fixed base or a cart fixed base (not shown). The first bracket 6221, the second bracket 6222 and the third bracket 6223 are connected to each other to constitute the bracket device 622, and the bracket device 622 is coupled to the box body 621 at the outside of the box body 621.

As shown in Figs. 6B and 6C, in this embodiment, the third bracket 6223 is a closed frame formed by connecting and enclosing a pair of long opposing rods 62231, 62232 and a pair of short opposing rods, and serves as a connecting structure of the animal carrier 62 of this embodiment. The supporting part 615 of the cart body 61 further includes a fixed base 6151, and the fixed base 6151 is formed with fixed guide grooves 61511 and 61512 as a connecting structure of the supporting part 615, into which the third bracket 6223 of the bracket device 622 is inserted and embedded with its long rods 62231 and 62232, respectively, so that the animal carrier 62 is engaged with the fixed base 6151 by means of its third bracket 623, thereby being installed and fixed to the cart body 61. In this embodiment, the direction and configuration of the fixed base 6151 and its fixed guide grooves 61511, 61512 are matched with the long rods 62231, 62232 of the third bracket 6223, however, the present disclosure is not limited thereto; alternatively, in other embodiments, the direction and configuration of the fixed guide groove may also be formed to match the short rod of the third bracket, depending on the actual application requirements.

Referring to Fig. 7A, which show a schematic appearance view of an animal transporting cart 7 according to one embodiment of the present disclosure. The animal transporting cart 7 has a similar structure and composition to the aforementioned animal transporting cart 6, including a cart body 71 and an animal carrier 72; the animal carrier 72 includes a box body 721 and a bracket device 722 which is stably coupled to the cart body 71 in a detachable manner. In this embodiment, the cart body 71 has a structure and composition similar to those of the aforementioned cart body 61, including a cart handle 711, a storage layer 712, a frame vertical rod 713 connecting the cart handle 711 and the storage layer 712, a wheel member 714 disposed at the bottom of the cart body 71, a supporting part 715, and the like. The difference between this embodiment and the aforementioned embodiments is that, in this embodiment, the fixed base 7151 is further provided with clamping hooks (only the clamping hook 71513 provided at the end 71512A is shown) in the two ends 71511A, 71511B, 71512A, 71512B of the fixed guide grooves 71511, 71512, respectively, so as to increase the fixing capability of the third bracket 722 to the fixed base 7151 when the third bracket 722 of the bracket device 722 is engaged with the fixed base 7151 (which will be further described below).

Referring to Figs. 7B and 7C, which show schematic appearance views the animal transporting cart 7 from different perspectives to illustrate the cart body 71 and the animal carrier 72 of the animal transporting cart 7 of this embodiment. In this embodiment, the animal carrier 72 has a structure and composition similar to those of the animal carrier 62, including a box body 721 and a bracket device 722, and the bracket device 722 includes a first bracket 7221 and a second bracket 7222 hooped on the outer edge of the box body 721 and having a contour corresponding to the outer edge of the box body 721, and a third bracket 7223 for installing the animal carrier 72 to, for example, a vehicle fixed base or a cart fixed base; the first brackets 7221, second brackets 7222, and third brackets 7223 are connected to each other to form a bracket device 722, and the bracket device 722 is coupled to the box body 721 at the outside of the box body 721.

Like the animal transporting cart 6 of the aforementioned embodiment, in this embodiment, the animal carrier 72 is inserted and embedded in the fixed guide grooves 71511, 71512 as the connecting structure of the fixed base 7151 through the opposite long rods 72231 and 72232 of the third bracket 7223 as the connecting structure, respectively, so as to be coupled to the cart body 71; the difference is that, in this embodiment, two ends of the fixed guide grooves 71511 and 71512 (such as the ends 71511A, 71511B, 71512A, and 71512B shown in Fig. 7A) are provided with respective clamping hooks, for example, clamping hooks 71513 and 71514 shown in Fig. 7C; when the third bracket 7223 is inserted and embedded in the fixed guide grooves 71511 and 71512 as the connecting structure of the fixed base 7151 with its opposite long rods 72231 and 72232, respectively, the third bracket 7223 can be more stably coupled to the fixed base 7151 by the engagement of the hooks 71513 and 71514 in the fixed guide grooves 71511 and 71512 with the pair of long rods 72231 and 72232 of the third bracket 7223, so that the animal carrier 72 can be more stably installed on the cart body 71.

In this embodiment, four clamping hooks are disposed in the fixed base 7151 (disposed at the four guide groove ends 71511A, 71511B, 71512A, and 71512B of the fixed base 7151 shown in Fig. 7A, respectively, but only the hook 71513 disposed at the end 71512A is shown for simplicity of drawing), however, the present disclosure is not limited thereto. In other embodiments, the number and the arrangement position of the clamping hooks may also be determined according to the actual application requirements, for example, the clamping hooks are arranged at the center of the fixed guide groove.

In this embodiment, a steel cable-type release mechanism may be further disposed on the fixed base 7151, and the operation key is used to link the steel cable and the unlocked portion to drive the release of the hook, so as to assist the third bracket of the animal carrier to withdraw from the clamping hook and the fixed guide groove.

Referring to Figs. 8A and 8B, which show schematic appearance views of an animal transporting cart 8 according to one embodiment of the present disclosure, respectively, from different perspectives. The animal transporting cart 8 has a similar structure and composition to those of the aforementioned animal transporting carts, including a cart body 81 and an animal carrier 82; the animal carrier 82 is stably coupled to the cart body 81 in a detachable manner. In this embodiment, the cart body 81 has a structure and composition similar to those of the aforementioned cart bodies, including a cart handle 811, a storage layer 812, a frame vertical rod 813 connecting the cart handle 811 and the storage layer 812, and a wheel member 814 disposed at the bottom of the cart body 81, and the like. The difference between this embodiment and the aforementioned embodiments is that, in this embodiment, the cart body 81 includes a supporting part 815, and the animal carrier 82 is buckled and fixed to a connecting structure 816 (e.g., connecting buckle) disposed on a supporting surface 815A of the supporting part 815 through a connecting structure (described further below) disposed on an outer side of a bottom surface of the box body, so as to be stably installed to the cart body 81.

Referring to Figs. 8C and 8D, which show detailed structures of the connecting structure 825 of the animal carrier 82 and the connecting structure 816 of the cart body 81 of the animal transporting cart 8 of this embodiment, respectively. As shown, in this embodiment, the animal carrier 82 includes a box body 821 and a bracket device 822, and the bracket device 822 includes a first bracket 8221 and a second bracket 8222 hooped on the outer edge of the box body 821 and having a contour corresponding to the outer edge of the box body 821; the first bracket 8221 and the second bracket 8222 are connected to each other to constitute a bracket device 822, and the bracket device 822 is coupled to the box body 821 at the outside of the box body 821. In this embodiment, the animal carrier 82 may not include a third bracket, so that the box body 821 is directly engaged with the supporting part 815 of the cart body 81; however, the present disclosure is not limited thereto. In other embodiments, a third bracket may be disposed at the bottom of the box body 821 of the animal carrier 82, which is similar to the structure and composition of the animal carrier of the aforementioned embodiment.

In this embodiment, the animal carrier 82 includes a connecting structure 825, and the connecting structure 825 is disposed at the center of the outer bottom of the box body 821; the connecting structure 825 includes a cylindrical buckling part 8251, and an annular engaging part 8252 around the periphery of the cylindrical buckling part 8251. The cart body 81 includes a connecting structure 816 (e.g., connecting buckle), the connecting structure 816 includes a buckle fixed seat 8161 and a cover body 8162, the buckle fixed seat 8161 is disposed at the center of the supporting part 815, and is connected and buckled to the connecting structure 825 via a through opening 8151 at a supporting surface (top surface) 815A of the supporting part 815; that is, in this embodiment, the connecting structure 825 of the animal carrier 82 is a male buckle structure, and the connecting structure 816 of the supporting part 815 is a female buckle structure, which are matched with each other to be buckled and connected. The cover body 8162 of the connecting structure 816 corresponds to the buckle fixed seat 8161 in shape, and is connected to the buckle fixed seat 8161 to define an accommodating space for accommodating the main structure and the members of the connecting structure 816.

Referring to Figs. 8D and 8E, the connecting structure 816 includes a pair of unlocking structures 8164 and a pair of interference structures 8165 corresponding to each unlocking structure 8164. The unlocking structures 8164 each include an operating part 8164A, a pair of engaging arms 8164B, and a pair of stoppers 8164C; the interference structures 8165 each include a first interference structure 8165A and a second interference structure 8165B. The operating part 8164A is located on an operating surface (bottom surface) 815B of the supporting part 815 and is partially exposed outside the cover body 8162 of the buckle fixed seat 8161 to facilitate user operation; a pair of engaging arms 8164B are located at both ends of the operating part 8164A, and the engaging arms 8164B may have elasticity, so that the engaging arms 8164B may constantly be abutted against the annular engaging part 8252 of the connecting structure 825, thereby connecting the box body 821 to the supporting part 815, so that the animal carrier 82 is stably connected to the cart body 81; a pair of stoppers 8164C are each formed between the operating part 8164A and the engaging arm 8164B, and abut against the first interference structure 8165A of the connecting structure 816. A part of the engaging arm 8164B abuts against the second interference structure 8165B and remains with its engaging end in abutment with the annular engaging part 8252 of the connecting structure 825 when the animal carrier 82 is connected to the cart body 81.

According to this embodiment, to uninstall the animal carrier 82 from the cart body 81, the user presses the operating parts 8164A of the pair of unlocking structures 8164 of the connecting structure 816; since the unlocking structure 8164 abuts against the second interference structure 8165B with a part of the engaging arm 8164B and abuts against the first interference structure 8165A with the stopper 8164C, the stopper 8164C and the engaging arm 8164B are interfered by the first interference structure 8165A and the second interference structure 8165B, respectively when the pair of operating parts 8164A are pressed toward each other , so that the engaging end of the engaging arm 8164B moves away from the connecting structure 816 and exits the annular engaging part 8252, and the connecting structure 825 and the supporting part 815 can be disengaged, and the animal carrier 82 can be detached from the cart body 81.

Optionally, in this embodiment, mutually matching magnetic elements may be further disposed between the cylindrical buckling part 8251 of the connecting structure 825 and the cover body 8162 (or within the buckling part 8251 and the cover body 8162), so as to guide the connecting structure 825 of the animal carrier 82 and the connecting structure 816 of the supporting part 815 to be aligned and coupled quickly through a magnetic effect between the mutually matching magnetic elements.

Referring to Figs. 9A and 9B, which show schematic appearance views of an animal transporting cart 9 according to one embodiment of the present disclosure, respectively, from different perspectives. The animal transporting cart 9 of this embodiment includes a cart body 91 and an animal carrier 92, and the animal carrier 92 is coupled to the cart body 91 in a detachable manner. In this embodiment, the cart body 91 has a structure and composition similar to those of the aforementioned cart bodies, including a cart handle 911, a storage layer 912, a frame vertical rod 913 connecting the cart handle 911 and the storage layer 912, a wheel member 914 disposed at the bottom of the cart body 91, a supporting part 915, and the like. In this embodiment, the animal carrier 92 is also buckled and fixed to a connecting structure provided on the top surface (supporting surface) 915A of the supporting part 915 via a connecting structure (described further below) provided on the bottom of the box body, thereby being stably installed to the cart body 91. The difference between this embodiment and the aforementioned embodiments is that, in this embodiment, the connecting structure of the supporting part 915 is a rotating buckle 916, and the rotating buckle 916 is disposed in the supporting part 915 and partially exposed to a bottom surface (operating surface) 915B of the supporting part 915 to facilitate the operation of the user; the animal carrier 92 can thereby be stably installed to the cart body 91 by the user operating the rotating buckle 916 to buckle with a connecting structure of the bottom of the box body 921 of the animal carrier 92 (described further below).

Referring to Figs. 9C and 9D, which show schematic appearance views of the animal carrier 92 of the embodiment from different perspectives. In this embodiment, the animal carrier 92 includes a box body 921 and a bracket device 922, and the bracket device 922 includes a first bracket 9221 and a second bracket 9222 hooped on the outer edge of the box body 921 and have a contour corresponding to the outer edge of the box body 921; the first bracket 9221 and the second bracket 9222 are connected to each other to constitute a bracket device 922, and the bracket device 922 is coupled to the box body 921 at the outside of the box body 921. In this embodiment, the animal carrier 92 may not include a third bracket, so that the bottom surface 921B of the box body 921 is directly engaged with the supporting part 915 of the cart body 91; however, the present disclosure is not limited thereto. In other embodiments, a third bracket may be disposed at the bottom of the box body 921 of the animal carrier 92, which is similar to the structure and composition of the animal carrier of the aforementioned embodiment.

In this embodiment, the animal carrier 92 has a connecting structure 925 formed at the bottom center of the box body 921. As shown, the connecting structure 925 has a "cross-shaped" structure on the bearing surface 921A of the box body 921, and is formed by intersecting a recess 9251 formed on the bearing surface 921A of the box body 921 and a penetrating part 9252 penetrating the bottom of the box body 921, so as to have a "straight line-shaped" structure on the bottom surface 921B of the box body 921; the animal carrier 92 receives connecting bump 9162 (shown in Fig. 9E) protruding from the top surface (supporting surface) 915A of the supporting part 915 with the penetrating part 9252 in such a "straight line-shaped" structure, and is further buckled with the connecting bump 9162 to be stably coupled to the supporting part 915 of the cart body 91.

Figs. 9F and 9G show an exploded schematic view and a partial cross-sectional schematic view of the supporting part 915 of the animal transporting cart 9 of this embodiment, respectively, to illustrate the detailed structure and action of the rotating buckle 916 of the cart body 91. The rotating buckle 916 includes an inner rod 9163 penetrating through the supporting part 915, an outer tube 9164 sleeved outside the inner rod 9163, and an elastic element 9165 sleeved between the inner rod 9163 and the outer tube 9164; the inner rod 9163 has a "T-shaped" structure in the longitudinal section, one end (bottom end) of the inner rod extends from the bottom surface (operating surface) 915B of the supporting part 915 and is connected to a knob 9161, and the knob 9161 is exposed on the bottom surface 915B of the supporting part 915 to facilitate the rotation operation of the user; the other end (top end) of the inner rod 9163 is connected to a connecting bump 9162 in a "straight line-shaped" structure, and the connecting bump 9162 may protrude from the top surface 915A of the supporting part 915 for locking and positioning of the box body 921 of the animal carrier 92. In this embodiment, the inner rod 9163 may be driven by the rotation of the knob 9161 to rotate and move relative to the outer tube 9164; that is, the inner rod 9163 may rotate relative to the outer tube 9164 and may move up and down relative to the outer tube 9164 to form a liftable structure with the outer tube 9164. The elastic element 9165 provides a driving force that allows the inner rod 9163 to produce the maximum amount of relative displacement relative to the outer tube 9164. In this embodiment, a sleeve 9151 is formed in the supporting part 915 at a position corresponding to the rotating buckle 916, which blocks the elastic element 9165 of the rotating buckle 916.

As shown in Figs. 9G to 9I, the rotating buckle 916 includes a locking member 9163A, which may be, for example, a latch independent of the inner rod 9163 or a protrusion formed on the rod body of the inner rod 9163. The tube wall of the outer tube 9164 is formed with a positioning groove 9164A penetrating the tube wall, and the size of the locking member 9163A is adapted to the width of the positioning groove 9164A and is movable in the positioning groove 9164A. In this embodiment, the positioning groove 9164A is a structure similar to a "7-shaped" structure formed by connecting a longitudinal groove 9164A1, a transverse groove 9164A2 and a positioning end 9164A3; as the inner rod 9163 moves upward from the lowermost position in the outer tube 9164, the locking member 9163A may correspondingly move upward in the longitudinal groove 9164A1 of the positioning groove 9164A, and rotate in the inner rod 9163 by the driving of the rotation of the knob 9161, enter the transverse groove 9164A2, continue to move transversely in the transverse groove 9164A2 in response to the rotation of the knob 9161, and finally enter the positioning end 9164A3 to be positioned therein; at this time, the movement stroke of the inner rod 9163 relative to the outer tube 9164 is maximized, and the inner rod 9163 is fixed relative to the outer tube 9164 when the locking member 9163A is located at the positioning end 9164a3. Further, since the inner rod 9163 is fixedly connected to the knob 9161, when the user pushes the knob 9161 upwards, the inner rod 9163 is driven to move upwards, and the locking member 9163A is driven to move upwards to the top end of the longitudinal groove 9164A1; next, the user rotates the knob 9161 to rotate the inner rod 9163 in the same direction, so that the locking member 9163A enters the transverse groove 9164A2 and further moves transversely to the end of the transverse groove 9164A2, so that the user cannot further rotate the knob 9161, and at this time, the connecting bump 9162 is rotated to the position of the recess 9251 from the state that the connecting bump 9162 is originally located in the penetrating part 9252 of the connecting structure 925 and is not coupled with the animal carrier 92. When the user stops applying force to the knob 9161, the inner rod 9163 may be reset due to the elastic force of the elastic element 9165.

As shown in Figs. 9G and 9H, the top end of the inner rod 9163 of the rotating buckle 916 is a connecting bump 9162 (i.e., the connecting bump 9162 shown in Fig. 9E) in a "straight line-shaped" structure, and the connecting bump 9162 may extend out of the penetrating part 9252 on the bearing surface 921A of the box body 921 of the animal carrier 92 along with the upward movement stroke of the inner rod 9163 (i.e., the connecting bump 9162 is engaged in the penetrating part 9252 of the matching connecting structure 925 and is higher than the bottom bearing surface 921A of the box body 921). When the user rotates the knob 9161 (e.g., rotates by 90 degrees), the connecting bump 9162 is driven to rotate synchronously (e.g., rotate by 90 degrees) and then stop and abuts against the recess 9251 of the connecting structure 925, so that the supporting part 915 is fixed and positioned by the box body 921, to complete the connecting and matching of the animal carrier 92 with the cart body 91. On the other hand, if the connecting and matching between the animal carrier 92 and the cart body 91 is to be released, the knob 9161 is pushed upward again to drive the inner rod 9163 to move upward away from the recess 9251, and the knob 9161 is rotated (for example, rotated by 90 degrees) to drive the connecting bump 9162 to rotate synchronously (for example, rotated by 90 degrees) and enter the above of the penetrating part 9252, so that the inner rod 9163 reaches the movable position. Since the connecting bump 9162 is located above the penetrating part 9252 and is in a state of not being coupled with the animal carrier 92, when the user stops applying force to the knob 9161, the inner rod 9163 moves downward (at this time, the connecting bump 9162 enters the penetrating part 9252) by being driven by the elastic force of the elastic element 9165, and the locking of the box body 921 to the supporting part 915 is released, so that the animal carrier 92 is detached from the cart body 91, as shown in Fig. 9I.

Referring to Figs. 10A and 10B, which show schematic appearance views of an animal transporting cart 10 according to one embodiment of the present disclosure. The animal transporting cart 10 of this embodiment includes a cart body 101 and an animal carrier 102, and the animal carrier 102 is coupled to the cart body 101 in a detachable manner. In this embodiment, the cart body 101 has a structure and a composition similar to those of the aforementioned embodiments, including a cart handle 1011, a storage layer 1012, a frame vertical rod 1013 connecting the cart handle 1011 and the storage layer 1012, and a wheel member 1014, and the like. The animal carrier 102 includes a box body 1021 and a bracket device 1022. The difference between this embodiment and the aforementioned embodiments is that, in this embodiment, a connecting structure is formed at the outer side of the bottom of the box body 1021 of the animal carrier 102, so as to be stably connected with the connecting structure on the top surface of the supporting part 105 of the cart body 101 in a track-connected manner.

As shown in Fig. 10B, at least one pair of guide grooves 1053 is provided on the fixed base 1051 of the supporting part 105 as a connecting structure, and a positioning part 1054 is provided on the fixed base 1051 near the front end. An operation key 1052 is disposed on the side of the fixed base 1051 for the user to operate to drive the positioning part 1054.

Referring to Fig. 10C, which shows a schematic structural diagram of the animal carrier 102 of this embodiment. In this embodiment, the box body 1021 of the animal carrier 102 is, for example, rectangular, and is formed by surrounding a bearing surface with a peripheral sidewall, the box body 1021 has opposite long sides and opposite short sides; the bracket device 1022 of the animal carrier 102 includes a first bracket 10221 and a second bracket 10222 hooped at the outer edge of the box body 1021 and having a contour corresponding to the outer edge of the box body 1021, and the first bracket 10221 and the second bracket 10222 provide a supporting force to the box body 1021 to increase the carrying strength of the animal carrier 102. In this embodiment, the animal carrier 102 is provided with a pair of guide rails 1023 as connecting structures outside the bottom surface 1021B of the box body 1021, and the guide rails 1023 protrude from the bottom surface 1021B of the box body and extend along a long side direction of the box body 1021 on the bottom surface 1021B. In this embodiment, each guide rail 1023 is composed of a plurality of guide rail sections (three guide rail sections 1023A1 to 1023A3 in this embodiment) separated from each other, however, the present disclosure is not limited thereto; in other embodiments, the guide rail 1023 may alternatively be formed as a single structure, depending on the application. The box body 1021 is formed with at least one positioning groove 1024 on the bottom surface 1021B, and the positioning groove 1024 is disposed between the pair of rails 1023 and at the front and rear ends (i.e. near the respective short sides of the box body 1021) of the bottom surface 1021B of the box body 1021.

Referring to Figs. 10D and 10E, which show schematic side cross-sectional views of the animal transporting cart 10 of this embodiment to illustrate the detailed structures of the operation key 1052 and the positioning part 1054 of the supporting part 105. The positioning part 1054 includes a positioning bump 10541, an elastic element 10542, and a driving pin 10543. One free end of the positioning bump 10541 has a guide surface 10541A for guiding the box body 1021, so that the positioning groove 1024 of the box body 1021 is unidirectionally driven under the guiding of the guide surface 10541A to be engaged with the positioning bump 10541, and the box body 1021 cannot slide out of the guide groove and fall off due to environmental disturbance; the other end of the positioning bump 10541 is connected to the elastic element 10542, and the elastic element 10542 provides a restoring force for resetting the positioning bump 10541. The driving pin 10543 connects the positioning bump 10541 with the operation key 1052; specifically, as shown in Fig. 10E, a inclined guide groove 1052A is formed at the end of the operation key 1052 is, and the driving pin 10543 is located in the guide groove 1052A and is displaceable relative to the slope of the guide groove 1052A.

As shown in Figs. 10D and 10E, when the animal carrier 102 is to be installed to the cart body 101, a pair of guide rails 1023 (see Fig. 10C) on the bottom surface 1021B of the box body 1021 of the animal carrier 102 are engaged with a pair of guide grooves 1053 (Fig. 10B) of the fixed base 1051 of the supporting part 105, respectively, and slide to be positioned under the guiding of the guide groove 1053. The free end of the positioning bump 10541 has a one-way guide surface 10541A, which can be pressed by the movement of the box body 1021 to the handle side to drive the positioning bump 10541 to move downwards, and is driven by the elastic element 10542 to be forced into the positioning groove 1024 of the box body 1021 and locked after the box body 1021 is positioned on the supporting part 105. When the animal carrier 102 is to be detached from the cart body 101, the user only needs to press the operation key 1052, and the operation key 1052 is moved to the rear end under the pressing force, so as to link the driving pin 10543 of the positioning part 1054 with the guide groove 1052A, thereby driving the positioning bump 10541 to move downward to exit from the positioning hole 1024, and releasing the locking of the animal carrier 102 on the supporting part 105. After the locking of the animal carrier 102 with the cart body 101 is released, the animal carrier 102 can be moved out of the supporting part 105 by the relative movement of the guide rail 1023 in the guide groove 1053.

In this embodiment, a bottom plate is used as the fixed base 1051 of the supporting part 105, and a guide groove 1053 is formed on the bottom plate as a connecting structure for connecting the animal carrier 102 with the guide rail 1023 at the bottom of the box body. In other embodiments, the supporting part 105 may further include a bottom plate and a peripheral side plate connected to the bottom plate, and even further include a top plate connected to the peripheral side plate to form a closed drawer structure, and the guide groove may be selectively formed in the top plate, the bottom plate, or the side plate to stably engage with the corresponding connecting structure of box body of the animal carrier 102. Alternatively, the peripheral wall of the animal carrier 102 may be made of a see-through rigid or flexible material to facilitate the user's view of the situation inside the animal carrier.

In the present disclosure, the respective connecting structures of the animal carrier 102 and the cart body 101 are not limited to the rail at the bottom of the box body and the guide groove on the supporting part; for example, in other embodiments, a first magnetic element may be disposed outside the bottom or the peripheral wall of the box body 1021 as the connecting structure, and a second magnetic element may be disposed on the top plate or the side plate of the supporting part 105 facing inward or on the fixed base as the connecting structure, so that the animal carrier 102 and the cart body 101 are quickly aligned and stably connected with each other by the magnetic effect of the first and second magnetic elements.

In the present disclosure, the height of the supporting part or the supporting frame of the cart body of the animal transporting cart may be adjusted to accommodate different animal carriers. In addition, the supporting part of the cart body of the animal transporting cart may be pivoted on the frame vertical rod, so as to be folded toward the frame vertical rod for facilitating the usage and storage of the cart body, as described below.

Referring to Fig. 11A, which shows a side cross-sectional schematic view of an animal transporting cart 15 according to one embodiment of the present disclosure. The animal transporting cart 15 includes a cart body 151 and an animal carrier 152; the animal carrier 152 is stably connected to the cart body 151 in a detachable manner. In this embodiment, the cart body 151 has a structure and a composition similar to those of the aforementioned cart bodies, including a cart handle 1511, a storage layer 1512, a frame vertical rod 1513 connecting the cart handle 1511 and the storage layer 1512, and a wheel member 1514 disposed at the bottom of the cart body 151, etc.; the animal carrier 152 has a similar structure and composition as the aforementioned embodiments, including a box body and a bracket device, and the like. The difference between this embodiment and the aforementioned embodiments is that, in this embodiment, the cart body 151 also includes an adjusting device 155, and the adjusting device 155 is connected to the supporting part 1515 (such as a supporting frame) and the frame vertical rod 1513. Therefore, the supporting part 1515 of the cart body 151 may be adjusted in height on the frame vertical rod 1513 and may rotate towards the frame vertical rod 1513 for folding the cart frame.

In detail, referring to Figs. 11B and Fig. 11C, which show partially exploded schematic views of the animal transporting cart 15 of this embodiment, respectively, to illustrate a detailed structure of the adjusting device 155. As shown, the pair of frame vertical rods 1513 of the animal transporting cart 15 area hollow structure having, for example, a rectangular cross section, and has guide grooves 1513A on the inner sides thereof facing each other for the adjusting device 155 to receive therein and move up and down. The adjusting device 155 includes an adjusting base 1551, an elastic element 1552, a gear member 1553, a connecting member 1554 and a fixed cover sheet 1555. The adjusting base 1551 has a first accommodating part 1551A and a second accommodating part 1551B. The outer contour of the first accommodating part 1551A is matched with the contour of the frame vertical rod 1553 and is disposed inside the frame vertical rod 1553; the second accommodating part 1551B is cylindrical and has a central pivot axis 1551C. The second accommodating part 1551B is formed with a plurality of protrusions at an inner edge, so as to have an inner contour 1551B1 matching the gear member 1553. The elastic element 1552 is sleeved on the central pivot axis 1551C, one end of the elastic element abuts against the inner side surface of the second accommodating part 1551B, and the other end of the elastic element abuts against the gear element 1553 for providing restoring force for resetting each member. The gear member 1553 is matched with the inner contour 1551B1 of the second accommodating part 1551B and engaged with the plurality of protrusions with its tooth parts, respectively. The connecting member 1554 is covered on the gear member 1553, the connecting member 1554 has a circular structure and has an extended connecting end 1554A connected to the short side end of the supporting part 1515 of the cart body. The fixed cover sheet 1555 is attached to the connecting member 1554 to enclose and protect the members within the adjusting device 155, and allows the user to press to unlock to activate the gear member 1553 to adjust the angle of the supporting part 1515.

As shown in Fig. 11C, the adjusting devices 155 are provided in the pair of frame vertical rods 1513 of the animal transporting cart of this embodiment, respectively. The adjusting device 155 is disposed inside the vertical rod 1513 with a first accommodating part 1551A, and a second accommodating part 1551B of the adjusting device 155 protrudes out of the frame vertical rod 1513 from the guide groove 1513A, so as to move up and down along the guide groove 1513A in the frame vertical rod 1513. In this embodiment, a positioning member 1556 is disposed inside the first accommodating part 1513A, and the positioning member 1556 is in a "zigzag" structure and stably abuts against the first accommodating part 1551A.

Referring to Fig. 11D, which shows a partial cross-sectional schematic view of the animal transporting cart according to this embodiment to illustrate the detailed structure and operation of the positioning member 1556 and the frame vertical rod 1513 of the adjusting device. In this embodiment, the positioning member 1556 has a "zigzag" structure and is stably disposed inside the first accommodating part 1551A of the adjusting device; the positioning member 1556 may be a "zigzag" sheet made of an elastic material, and has a protrusion formed at one end thereof as a positioning end 1556A and the other end is abutted against the inner wall of the first accommodating part 1551A as an abutting end 1556B. In this embodiment, the frame vertical rod 1513 has a hollow structure with a rectangular cross section, and a plurality of positioning holes 1513B1 to 1513B4 are formed on a side surface (for example, a side surface close to the cart handle), and the positioning holes 1513B1 to 1513B4 are through-hole structures penetrating through the wall of the rod. In this embodiment, the positioning end 1556A of the positioning member 1556 may be inserted into each positioning hole 1513B1 to 1513B4 for fixing, so that the supporting parts are located at each corresponding height stage.

Referring back to Figs. 11A and 11B, in this embodiment, respective adjusting device 155 are disposed in the pair of vertical frame rods 1513 of the cart body 151 of the animal transporting cart 15, the adjusting devices 155 are disposed in the vertical frame rods 1513 with their first accommodating parts 1551A, and connected to the supporting parts 1515 of the cart body 151 with their second accommodating parts 1551B and the connecting members 1554 extending from the guide grooves 1513A of the vertical frame rods 1513 . By moving up and down of the adjusting device 155 with the first accommodating part 1551A in the frame vertical rods 1513 and the second accommodating part 1551B in the guide grooves 1513A, and cooperaing the fixing of the positioning holes of the frame vertical rods 1513 by the positioning ends 1556A of the positioning members 1556 in the first accommodating part 1551A, and the supporting part 1515 and the animal carrier 152 installed thereon may be adjusted to a suitable height and then locked for positioning. Also, the gear member 1553 in the adjusting device 155 is engaged and positioned relative to the inner contour 1551B1 of the second accommodating part 1551B, so that the gear member is rotatable around the direction of the connecting line where the cart handle 1511 connects with the frame vertical rod 1513 to drive the supporting part 1515 and the animal carrier 152 installed thereon to rotate upward or downward to a proper angle for positioning, and the supporting part 1515 is rotatable downward to a direction perpendicular to the ground for folding after the animal carrier 152 is detached from the cart body 151, thereby facilitating the storage of the cart body.

While in this embodiment the height adjustment and the angle adjustment performed by the adjusting device 155 (the adjusting device 155 shown in Fig. 11B) are taken as an example for illustration, but the present disclosure is not limited thereto. In other embodiments, the adjusting device may also include only the angle adjusting mechanism shown in Fig. 11C or only the height adjusting mechanism shown in Fig. 11D, depending on the actual application.

In summary, the present disclosure provides an animal transporting cart, which can be used for simply, conveniently and stably installing and fixing an animal carrier thereon, and at the same time, provides a user with enough space for placing articles.

Through the design of the supporting part of the present disclosure, the installing height of the animal carrier in the animal transporting cart may be adjusted according to the actual application requirements. In addition, the supporting part in the animal transporting cart is rotatable around the connecting direction at the connection of the frame vertical rod and the cart handle, so that the angle of the animal carrier fixed on the supporting part can be adjusted, the cart body can be conveniently stored after the animal carrier is detached, and the application potential is high.

It should be noted that all parameters, dimensions, materials and configurations described in the present disclosure are as exemplary illustrations, and the actual parameters, dimensions, materials and/or configurations thereof depend on the specific application or the application disclosed in the present disclosure. It should be understood that the aforementioned embodiments are mainly presented by way of example, and within the scope of the appended claims and their equivalents, the concepts and embodiments of the present disclosure may be implemented in a manner different from that specifically described and claimed. The embodiments of the present disclosure relate to each of the above individual features, elements, products, materials, components and/or methods.

In addition, if such features, elements, products, materials, components and/or methods are not inconsistent with each other, any combination of two or more such features, elements, products, materials, components and/or methods is included in the invention scope of the present disclosure. Without departing from the scope of the present disclosure, other replacements, modifications, changes and omissions may be made to the design, operating conditions and configuration structures of the corresponding elements of the above embodiments. The use of numerical ranges does not exclude equivalents that fall outside the scope of satisfying the same function in the same manner to produce the same results.

## Claims

1. An animal transporting cart comprising a cart body and an animal carrier, wherein the cart body comprises a cart handle, a storage layer, at least one pair of frame vertical rods which are connected to the cart handle and the storage layer, and a wheel member, **characterized in that**:
the animal carrier comprises a box body and a bracket device, wherein the box body comprises a bottom and a peripheral wall connected to the bottom, and the bracket device is combined to the box body at the outer side of the peripheral wall;
the cart body comprises a supporting part, and the supporting part is parallel to the storage layer and is connected to the frame vertical rod at a position higher than the storage layer; and
the animal carrier is separably connected to the supporting part through one of the peripheral wall and the bottom.

2. The animal transporting cart according to claim 1, **characterized in that**: the supporting part comprises four side parts corresponding to the peripheral wall of the animal carrier, and the animal carrier is separably connected to the corresponding opposite side parts of the supporting part with the opposite side parts of the peripheral wall.

3. The animal transporting cart according to claim 2, **characterized in that**: the animal carrier comprises at least one pair of connecting structures, the connecting structure is connected to the outer side of the opposite side part of the peripheral wall, and the box body is correspondingly connected to the opposite side part of the supporting part through the connecting structure.

4. The animal transporting cart according to claim 3, **characterized in that**: the connecting structure and the box body are an integrally formed structure.

5. The animal transporting cart according to claim 3, **characterized in that**: the connecting structure and the bracket device are an integrally formed structure.

6. The animal transporting cart according to claim 3, **characterized in that**: the animal carrier comprises an adjusting bracket, the adjusting bracket has opposite fixed sides and opposite movable sides, the adjusting bracket is connected to the outer side of the peripheral wall of the box body through the fixed sides, and the adjusting bracket changes the distance between the movable sides through the telescoping of the movable sides; the connecting structures are disposed at the movable sides, respectively, and the box body is connected to the supporting part through the connecting structures.

7. The animal transporting cart according to claim 6, **characterized in that**: the connecting structure is a fixed lug, and the box body is correspondingly hung to the opposite side parts of the supporting part through the fixed lug so as to be connected to the supporting part.

8. The animal transporting cart according to claim 3, **characterized in that**: the connecting structure is a fixed lug, and the box body is correspondingly hung to the opposite side parts of the supporting part through the fixed lug so as to be connected to the supporting part.

9. The animal transporting cart according to claim 3, **characterized in that**: the connecting structure is a first connecting structure, the supporting part comprises a second connecting structure corresponding to the first connecting structure, the second connecting structure is disposed on the corresponding opposite side part of the supporting part, and the box body is connected to the supporting part through the corresponding engagement of the first connecting structure and the second connecting structure.

10. The animal transporting cart according to claim 9, **characterized in that**: the first connecting structure is a connecting base, the second connecting structure is a connecting buckle, and the box body is connected to the supporting part via connecting buckle correspondingly accommodating in the connecting base.

11. The animal transporting cart according to claim 9, **characterized in that**: the first connecting structure is one of a positioning bump and a connecting groove, the second connecting structure is the other of the positioning bump and the connecting groove, and the box body is connected to the supporting part throught the corresponding engagement between the connecting groove and the positioning bump.

12. The animal transporting cart according to claim 1, **characterized in that**: the supporting part comprises a fixed base, the fixed base comprises a supporting surface corresponding to the bottom of the animal carrier, and the animal carrier is separably connected to the supporting surface of the supporting part with the bottom.

13. The animal transporting cart according to claim 12, **characterized in that**: the animal carrier comprises a connecting structure, the connecting structure is connected to the outer side of the bottom, and the box body is correspondingly connected to the supporting surface of the supporting part through the connecting structure.

14. The animal transporting cart according to claim 13, **characterized in that**: the connecting structure is a first connecting structure, the supporting part comprises a second connecting structure corresponding to the first connecting structure, the second connecting structure is disposed on the supporting surface, and the box body is connected to the supporting part through the corresponding engagement of the first connecting structure and the second connecting structure.

15. The animal transporting cart according to claim 14, **characterized in that**: the first connecting structure is a bracket device, the second connecting structure is a fixed guide groove, and the bracket device may be matched and engaged with the fixed guide groove.

16. The animal transporting cart according to claim 15, **characterized in that**: the fixed base comprises a clamping hook disposed in the fixed guide groove, so that bracket device is engaged with the clamping hook when the bracket device is engaged with the fixed guide groove.

17. The animal transporting cart according to claim 14, **characterized in that**: the first connecting structure is disposed at the center of the outer side of the bottom of the box body, the second connecting structure is disposed at the center of the supporting surface, and the first connecting structure and the second connecting structure may be matched and buckled.

18. The animal transporting cart according to claim 17, **characterized in that**: the first connecting structure and the second connecting structure are pressed in and buckled or rotated and buckled.

19. The animal transporting cart according to claim 14, **characterized in that**: the first connecting structure is a guide rail and the second connecting structure is a guide groove, the guide rail and the guide groove may be matched and engaged.

20. The animal transporting cart according to claim 19, **characterized in that**: the animal carrier comprises at least one positioning groove formed at the outer side of the bottom of the box body, and the supporting part comprises a positioning part which may be driven to protrude from the supporting part so as to be engaged with the positioning groove.

21. The animal transporting cart according to claim 19, **characterized in that**: the supporting part comprises a bottom plate and a peripheral side plate connected to the bottom plate.

22. The animal transporting cart according to claim 20, **characterized in that**, the supporting part also comprises a top plate connected to the peripheral side plate and opposite to the bottom plate.

23. The animal transporting cart according to claim 12, **characterized in that**: the first connecting structure is a first magnetic element, the second connecting structure is a second magnetic element, and the box body is connected to the supporting part through magnetic attraction engagement of the first magnetic element and the second magnetic element.

24. The animal transporting cart according to claim 1, **characterized in that**: the animal transporting cart comprises an adjusting device, the adjusting device is connected with the supporting part and disposed in the frame vertical rod, and the supporting part is movable up and down or angle-adjustable relative to the frame vertical rod through the adjusting device.

25. The animal transporting cart according to claim 1, **characterized in that**: the animal transporting cart comprises an adjusting device, the adjusting device is connected with the supporting part and disposed in the frame vertical rod, and the adjusting device is rotatable around the direction of the connecting line where the cart handle connects with the frame vertical rod.

26. An animal transporting cart comprising a cart body and an animal carrier, wherein the cart body comprises a cart handle, a storage layer, at least one pair of frame vertical rods which are connected to the cart handle and the storage layer, and a wheel member, **characterized in that**:
the animal carrier comprises a box body and a bracket device, wherein the box body comprises a bottom and a peripheral wall connected to the bottom, and the bracket device is combined to the box body at the outer side of the peripheral wall;
the cart body comprises a supporting part, and the supporting part is perpendicular to the storage layer and is connected between the frame vertical rods at a position higher than the storage layer; and
the animal carrier further comprises a connecting structure, the connecting structure is disposed at the outer side of the peripheral wall, and the box body is connected to the supporting part through the connecting structure.

27. The animal transporting cart according to claim 26, **characterized in that**: the connecting structure is a fixed lug, the supporting part is a supporting plate, and the box body is hung on the supporting plate through the fixed lug.
